# EUROPEAN PATENT APPLICATION

(11) **EP 1 772 201 A1**
(43) Date of publication of application: **11.04.2007**
(21) Application number: 05766370.0
(22) Date of filing: 19.07.2005
(51) Int. Cl.: B08B 9/093, B05B 12/00, B05D 1/02, B08B 3/02, B65D 90/02, G06F 19/00, G06T 15/50

(54) **FLUID SPRAY SIMULATION METHOD, COMPUTER PROGRAM, OBJECT TO BE SPRAYED, BATH, BATH MANUFACTURING SYSTEM, AND SPRAY NOZZLE**

(30) Priority: 27.07.2004 JP 2004218444; 09.03.2005 JP 2005065429
(71) Applicant: Plant Engineering Corporation, Izumi-shi Oita 5941144 (JP)
(72) Inventor: ONOZUKA, Yasunori, c/o Plant Engineering Corp., Izumi-shi, Osaka 5941144 (JP)
(74) Representative: HOFFMANN EITLE
(86) International application number: PCT/JP2005/013250
(87) International publication number: WO 2006/011392

(57) **Abstract**

To provide a fluid spray simulation method for verifying a sprayed state of a sprayed object by a spray nozzle so as to reflect a physical orbit of fluid sprayed from the spray nozzle.

[Means for solving the Problem]

A bath model is created by TIN data and each of the apexes of the bath model is moved downward in accordance with mathematical expressions of a distance from a spray nozzle and a gravity orbit. A ray tracing calculation is performed to specify a portion shaded by light from a light source positioned at a position of the spray nozzle. After this, the apexes of the bath model which have been moved downward are returned to their previous positions and visualized, thereby enabling fluid spray simulation reflecting a physical orbit considering the affect of gravity of a cleaning solution sprayed from the spray nozzle.

## Description

### Technical Field

The present invention relates to a fluid spray simulation method for verifying a sprayed state of a sprayed object having three-dimensionally various shapes which is sprayed by a spray nozzle, a computer program performing the fluid spray simulation, the sprayed object, a bath which is one of the sprayed objects, a bath manufacturing system, and the spray nozzle.

### Background Art

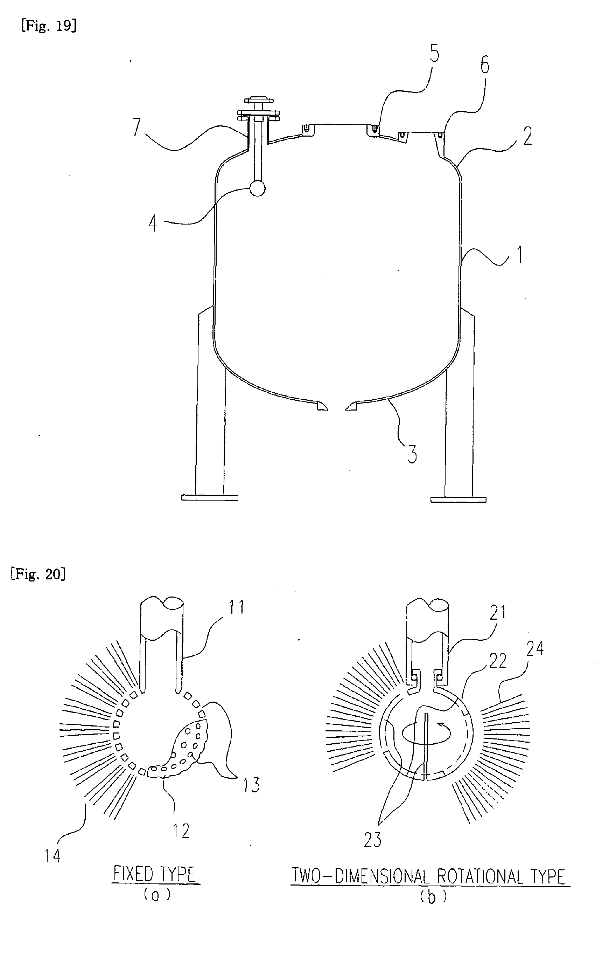

In Fig. 19, an upper specular plate 2 and a lower specular plate 3 are mounted on a shell plate 1 of a bath, and the upper specular plate 2 is provided with a pipe connection nozzle 5, a pipe connection nozzle 6 and a spray nozzle seat 7. A spray nozzle 4 spraying cleaning solution is mounted on the spray nozzle seat 7.
When manufacturing and delivering for the products as tanks and containers, manufacturing of each part is usually divided. Accordingly, the specular plates are manufactured by specialized makers, the pipes are manufactured by pipe makers, and flanges are manufactured by flange makers. The parts are welded by makers as can manufacturers so as to join the parts, and are delivered as a finished product.

Fig. 20 is a diagram illustrating a shape of the spray nozzle used for cleaning of the bath. Fig. 20(a) illustrates a fixed spray nozzle and Fig. 20(b) illustrates a two-dimensional rotational spray nozzle.
In Fig. 20(a), a fixed cleaning nozzle 12 is supplied with cleaning solution from a cleaning solution supply line 11 for the fixed spray nozzle, and sprays cleaning solution 14 from cleaning solution spray holes 13 provided in the fixed cleaning nozzle 12.
In Fig. 20(b), a two-dimensional rotational spray nozzle 22 is supplied with the cleaning solution from a cleaning solution supply line 21 for the two-dimensional rotational spray nozzle, and sprays cleaning solution 24 from cleaning solution spray slits 23 provided in the two-dimensional rotational spray nozzle 22.
Further, the cleaning solution spray slit 23 is generally cut in vertical direction, and an inner wall of the bath is cleaned by the cleaning solution 24 horizontally rotating in a fan-like shape dispersed longitudinally.
Fig. 21 is a diagram illustrating a spray nozzle which has a plurality of small conical jet fixed nozzles.

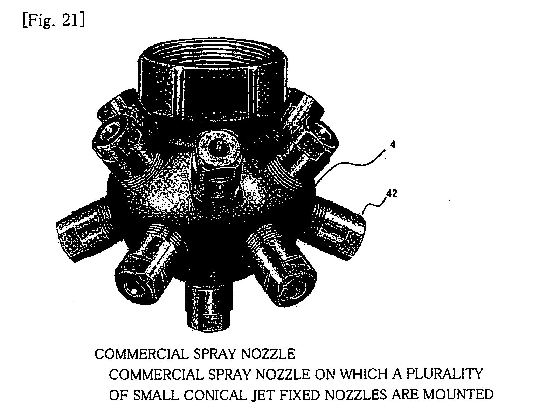

In Fig. 21, the plurality of small conical jet fixed nozzle 42 are provided on the spray nozzle 4.

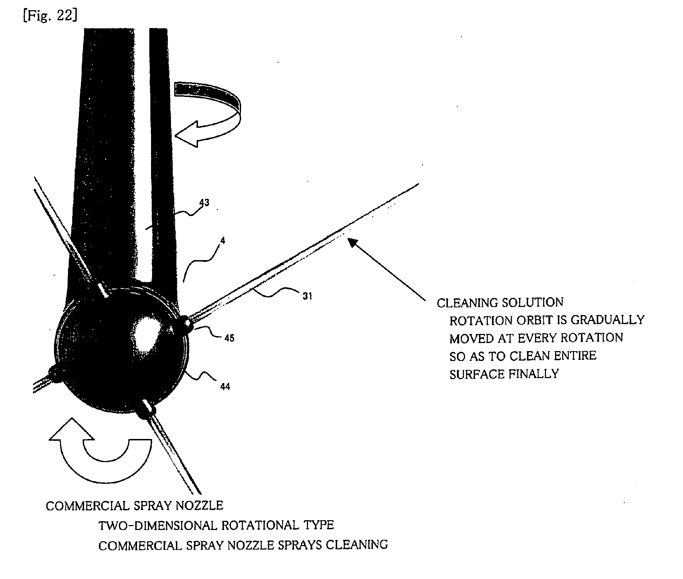

Fig. 22 is a diagram illustrating a three-dimensional rotational spray nozzle.
In Fig. 22, the spray nozzle 4 has a shaft portion 43 and a rotation portion 44. A plurality of nozzle portions 45 which sprays cleaning solution 31 in a straight line shape to prevent dispersion are provided on the rotation portion 44. A rotation orbit of the cleaning solution 31 is gradually moved at every rotation of the nozzle portion 45 by rotation of the rotation portion 44, finally the entire inner wall surface of the bath is cleaned.

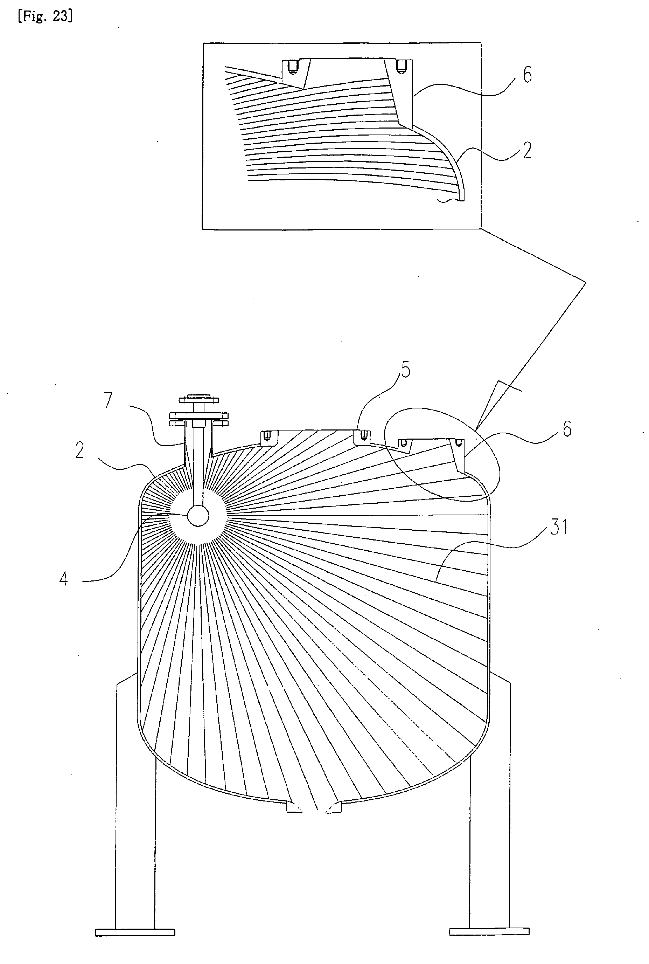

Fig. 23 is a diagram illustrating a state in which the cleaning solution is sprayed from the spray nozzle.
In Fig. 23, the cleaning solution 31 having a predetermined initial speed and a direction vector is sprayed from the spray nozzle 4. Actually, this cleaning solution 31 draws a downward curve by gravity rather than a straight line.

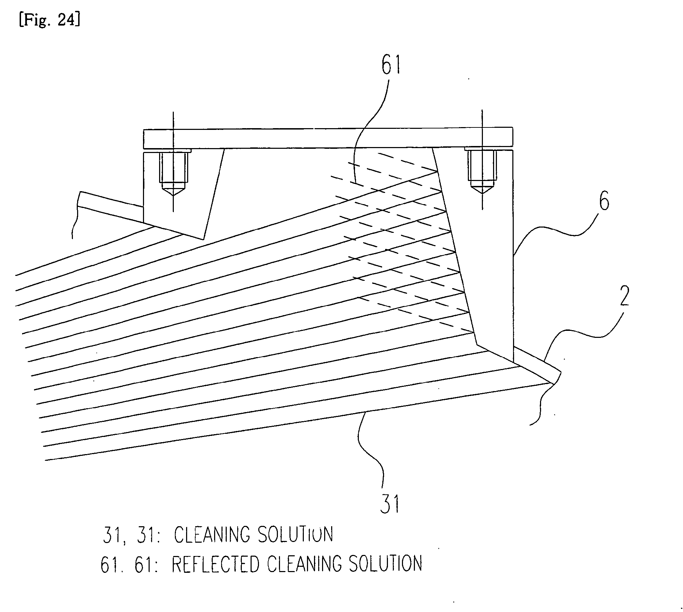

Fig. 24 is a diagram illustrating cleaning solution which is sprayed from the spray nozzle and reflected on the inner wall surface of the bath.
In Fig. 24, cleaning fluid 31 sprayed from the spray nozzle represents cleaning solution 61 reflected from the inner wall surface of the bath.

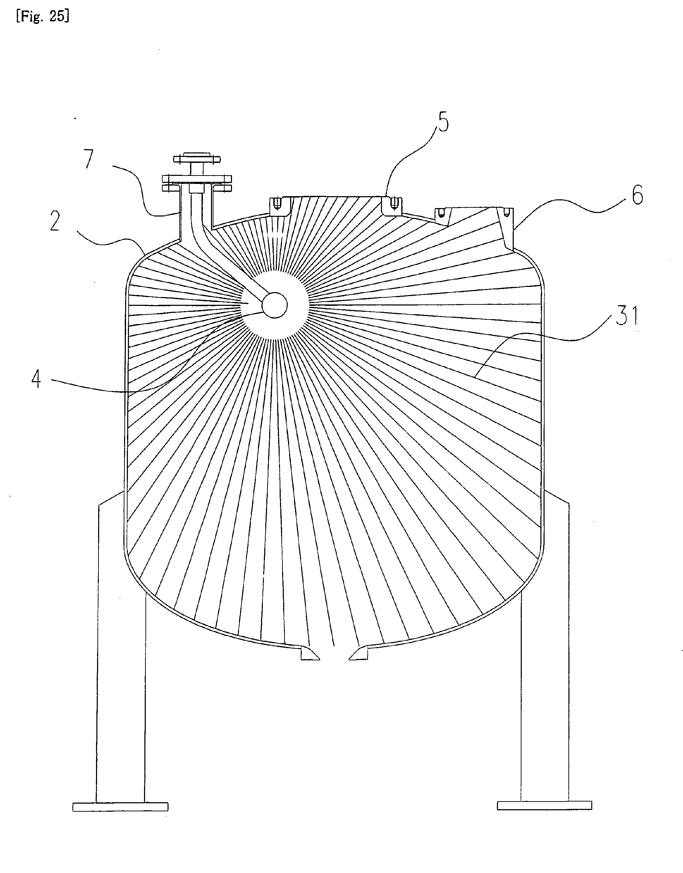

Fig. 25 is a diagram illustrating a spray nozzle of which a planar position is changed.
In Fig. 25, the spray nozzle 4 is bended.
Accordingly, the planar position thereof is changed.

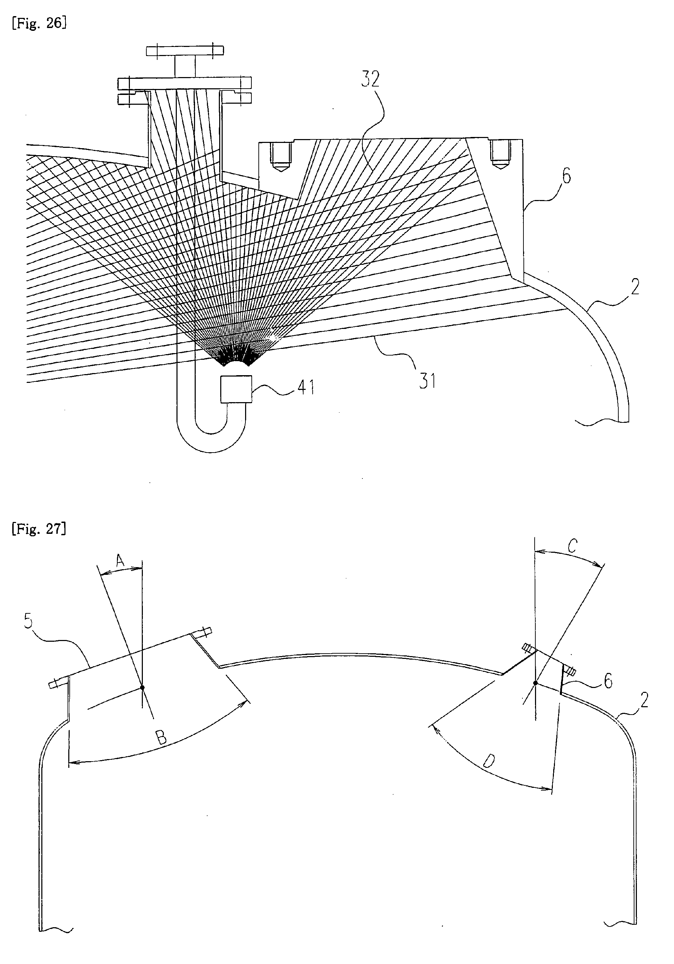

Fig. 26 is a diagram illustrating a spray nozzle provided only for dead area in the bath.
In Fig. 26, a spray nozzle 41 only for the dead area is provided separately from common spray nozzles, and cleaning solution 32 is sprayed from the spray nozzle 41.

Fig. 27 is a diagram illustrating an unevenness portion in the bath, mounted obliquely and having a taper pipe shape.
In Fig. 27, each pipe connection nozzle 5 and a pipe connection nozzle 6 has oblique angles A and C to a vertical axis, and pipe portions are formed by taper pipes having angles B and D.

Generally, the fixed spray nozzle or two-dimensional rotational spray nozzle designed to spray the solution in all directions as shown in Fig. 20, or spray nozzles such as the three-dimensional rotational or up-and-down moving spray nozzle is used for cleaning and sterilization of the interior of the baths and containers used in industrial plants as shown in Fig. 19, and these spray nozzles are available in the market. The interior of the bath and container is cleaned and sterilized by spraying solvent or sterilization solution from the spray nozzle 4. When cleaning the interior of the bath and container, it is preferable to finish the cleaning and sterilization by automatic operation without manual cleaning upon requests for economic reason and accuracy.
The cleaning solution sprayed from the spray nozzle 4 is sprayed to each part in the bath while receiving the gravity and resistance of gas in the bath as shown in Fig. 23. One to three of the spray nozzles 4 are generally provided in one bath, and selected to have an ability capable of spraying the cleaning solution at speed sufficient to practical use depending on a size of the bath.
Such a cleaning device is shown in Patent Document 1. In Patent Document 1, it is shown that the plurality of the spray nozzles are mounted on a peripheral surface of the rotation shaft supported rotatably in an interior of a stirred bath and the interior of the stirred bath is cleaned by the plurality of the spray nozzles.

However, even if the spray nozzle 4 having the satisfactory ability is used, there are unevenness portions such as manhole, hand hall, peephole, pipe connection nozzle, stirrer seat, etc. on each part of the bath and the container, and even if the plurality of the spray nozzles or the up-and-down moving spray nozzle are used, there is a shade. Accordingly, it is necessary to carefully design shapes of the bath and the container so as to generate no shade of the each spray nozzle 4 to the straight line.
When the spray nozzle is used to clean the bath, since the spray nozzle does not move planarly, specifically, the dead area is generated in each nozzle (unevenness portion) mounted on the upper specular plate. Accordingly, the part which cannot be cleaned is generated. In a case of the spray nozzle which is three-dimensionally rotated or moved up-and-down, the spray nozzle little moves planarly, so that the moving in the up-and down direction cannot be very effective in the removal of the dead area on the upper specular plate. Accordingly, it is necessary for each nozzle mounted on the bath to have a shape which does not make the dead area and is cleaned easily. When the spray nozzle can move planarly and widely, there is no need to have the shape.
Accordingly, various methods which can freely move the spray nozzle with the structure such as a manipulator has been devised. However, the methods have not spread among people from a viewpoint of a complicate structure, economy and reliability.
Further, it is impossible to move the mounting location of the spray nozzle other than the up-and-down moving spray nozzle down limitlessly in relationship with the internal solution surface of the bath.

Under the conditions, the bath and the container are commonly designed with paper drawing and figure and two-dimensional CAD, and it is unusual to design the bath and the container with three-dimension detecting technique such as three-dimensional CAD. Even if a three-dimensional design is performed, an object of the design is for structure analysis such as stress, not for cleaning ability. However, in shape designing (two-dimensional design) with the paper drawing and figure and two-dimensional CAD, the shape of the bath having three-dimensional shape cannot be completely detected, and it is difficult to specify which area becomes "shade (dead area) " from the spray nozzle. Even if a designer designs a shape having no "shade" through great imagination, it is almost impossible to reflect the orbit of the cleaning solution drawing the downward curve by the gravity.
The cleaning solution is sprayed from the spray nozzle at a predetermined initial speed. However, the cleaning degree of the bath wall is changed by the speed and distribution density at the time of attainment of the cleaning solution. As the cleaning solution is far from the spray nozzle and positioned in an upper direction from the spray nozzle, the initial speed decreases by gravity, and the cleaning solution is dispersed so that the density thereof becomes low and the cleaning degree deteriorates.

In an actual design of the bath, it is unusual to ideally dispose the unevenness portion such as the pipe connection nozzle or the manhole in the bath only for the cleaning ability. It is also conceivable that a portion which becomes the "shade (dead area)'' cannot be removed by limitations such as pipe layout or size of the bath.
In this case, cleaning by reflection of the cleaning solution as shown in Fig. 24 can be expected. However, by collision angle between the orbit thereof and a cleaned portion and speed at the time of the collision of the cleaning solution, the cleaning solution to be reflected draws a new orbit. In addition, according to experimental data, when the cleaning solution collides with the cleaned portion, the speed of the cleaning solution remarkably decreases and is dispersed on a collision surface, and range and amount of the cleaning solution flying in air after reflection is too small. Accordingly, it is very difficult to specify an effective zone of the reflection cleaning, and the effectivity is low.
In Patent Document 2, a direction change device jetting high pressure water from the nozzle, peeling a surface layer of an object, and changing a movement method of the jetted high pressure water is described.
However, the direction change device of the Patent Document 2 changes an movement direction of the high pressure water along a shape of the surface layer of the object, so that it is necessary to provide the direction change device with high accuracy. It was difficult to remove adjustment errors and poor operations generated by people.

Even if a three-dimensional CAD type software available in the market is used, a function to solve the problems on the design is not included in the software, and when a designer reflects the orbit of the cleaning solution on the three-dimensional CAD to design the bath, time for design becomes long enormously. Accordingly it is not economically advantageous in a viewpoint of commercial base.
Further, when a computer graphic type software available in the market is used, automatic design can be supported partially by a function to express illumination and shade of an illumination source referred to as a ray tracing. However, it is impossible to reflect the orbit and the speed of the cleaning solution by gravity at the time of the collision with the bath wall.
Moreover, a simulation software capable of specifying an object of the cleaning and easily handled by general bath designers are not available in the market.
For example, in Patent Document 3, substituting light for solution flying artificially in order to perform the simulation is described. In a method of reflecting physical orbit by gravity, a position of a source of luminescence moves up and down, or refraction in a predetermined direction substitutes artificially for a fly physical orbit. This method cannot be applied to the sprayed object which is a three-dimensional object having various distances from a light source such as the bath, a bathtub, and a structure.
In a simulation to display a temporal change of the solution shape, etc. in Patent Document 4 and a simulation of a solution flow such as ink release in Patent Document 5, it is possible to detect a fly state of the solution and a state in which the solution collides with the sprayed object. However, mainly a state of solution particle on the limited shape of the sprayed object (planar surface, etc.) at limited distance can be detected. The sprayed state of the sprayed object to be sprayed by solution sprayed widely cannot be detected.
To detect the sprayed state of the sprayed object sprayed by the solution sprayed widely, spray density of a predetermined area and distance between respective portions of the sprayed object must be respectively defined. Accordingly, the sprayed state of the sprayed object having various shapes cannot be detected by defining a correlation position with three-dimensional model of the spray nozzle by using the three-dimensional model of the sprayed object in Patent Document 4 and Patent Document 5 .
Patent Document 6 describes calculation of coating lightness distribution by using simulation. However, it is not for the three-dimensional model having various shapes.

By general design techniques in present situation, it is possible to confirm which area becomes the dead area after a product provided with the spray nozzle is manufactured and trially operated. In other words, after product manufacturing, problems related to the cleaning ability can be clear and resolved.
Main material of the bath configured to have the cleaning ability is generally stainless-steel. When performing heat-processing such as cutting or welding for the stainless-steel, it is easy to generate shape change of the stainless-steel, and reconstruction after product completion needs substantial cost and time. Delay of delivery date of the bath substantially influences a construction plan of the entire plant facilities using the bath.
Generally, the bath used in these industrial plant facilities is individually designed one by one at every manufacturing. Large-scale production or middle-scale production of the same is very few.

Even if the tree-dimensional design technique or conventional two-dimensional design technique is used, the cases remain that the dead area cannot be completely removed by various restrictions. However, when an appropriate three-dimensional design is performed, it is possible to detect which area becomes the dead area in the step of designing the bath. In the case of two-dimensional design, the position of the dead area is detected after the bath completion and trial operation of the bath. This problem considerably influences the construction plan of the entire device using the bath. However, in a case where the dead area cannot be completely removed even if any design technique is used, some measures are necessary.

General measures are described as follows.
(1) A measure for modifying the shape of the portion such as the manhole to remove the dead area
   As described above, after the bath is completed by using buffing construction, reconstruction of the bath is difficult or impossible in many cases.
   Except for wrong measurement at the time of the construction, when the three-dimensional design is created well, the reconstruction cannot be performed. Accordingly the measures cannot be taken in the situation.
(2) A measure for changing the commercially available spray nozzle selected at first into a model having large discharge volume or a model moving three-dimensionally and up-and-down
   In this case, since the size of the spray nozzle itself becomes larger, it is necessary to provide a larger mounting seat. Accordingly, since the reconstruction of the bath is necessary, there are many cases that the spray nozzle cannot be changed as described above.
   In addition, when the amount of the required supply cleaning solution becomes large, it is necessary to reconsider the entire cleaning solution supply system, or it is necessary to provide electric wiring and pneumatic piping for rotational drive.
(3) A planar position of the spray nozzle is changed as shown in Fig. 25 in which the pipe connected with the internal cleaning spray is bended to change the spray position
   In this case, since the spray position is changed to clean the area becoming the dead area, there is a danger that the area except for the dead area becomes dead area.
(4) The number of the spray nozzle is increased
   For example, when the dead area is left even if two two-dimensional rotational nozzles are used, there is a method of increasing the number of the nozzle up to three to remove the dead area. In this case, the required amount of the cleaning solution becomes larger up to one and a half times, it is necessary to reconsider the supply amount of the cleaning solution. Additional
   construction of the spray nozzle cannot be performed in many cases depending on the pipe layout or a number of general nozzles other than the cleaning nozzles.

(5) The dead area is removed by adding the small fixed spray nozzle and pinpoint spraying the solution to the dead area
   As shown in Fig. 26, the nozzle for the dead area is added separately from the main spray nozzle.
   This measure is generally executed for the construction. The measure is effective, the size of the added spray is small so that the amount of the cleaning solution is small, and an impact on the entire cleaning system is also small. However, even it has a small size, it is necessary to additionally construct the cleaning solution pipe. For example, when pipes of about one to three are additionally constructed in the plant using several dozens of baths, the impact is not small.
   In food and medical plants requiring high cleaning ability and sterilization, it is vital to provide the interior of the bath having an even shape which has high cleaning ability as much as possible without unevenness. However, the added small nozzle makes the shape of the interior of the bath complicated, and becomes a reason of germ generation. Accordingly, it is desirable to minimize the number of the added small nozzle.
(6) Complete cleaning is given up and hand-cleaning for the dead area is performed by human
   Since human workforce is added, it is possible that the cleaning ability becomes different at every cleaning. Further, when the complete cleaning is planned and a master plan of facilities is provided, adding human workforce considerably influences the plan, including a change of a production schedule and an operating program to the plan. Providing a step of hand-cleaning while pursuing automatic cleaning is a case of the tail wagging the dog.

When pursuing the bath having high cleaning ability and no dead area, the status and position of the dead area and the effective measure thereof can be determined in bath design step or can be determined in bath completion and trially operation step depending on a difference in design technique. The difference considerably influences the delivery date of the bath and the providing plan of the entire device.
It should be noted that, for example, when the bath is completed by using the design technique such as two-dimensional design technique which cannot detect the three-dimensional shape, the measures are implemented without grasping the effect of the measures even if countermeasure construction is performed. Accordingly, try & error is repeated, and performed just before the appointed delivery date.

In a case where cleaned object is, for example, canned product (a generic term of molded object which is manufactured by bending or welding a steel plate such as stainless-steel), when the shape of canned product is optimized to improve the cleaning ability, the unevenness portion (which is named generally with a nozzle as industrial name. It is different from the spray nozzle) such as manhole, hand hall, peephole, pipe connection nozzle and stirred bath is obliquely mounted on the vertical axis as the pipe connection nozzles 5 and 6 in Fig. 27, or a neck portion originally having a simple pipe shape has a taper pipe shape in order that the cleaned object has a shape partially different from common tank.

A common canned product is produced on by one, not produced in large scale, and brings big errors in manufacturing when comparing the common canned product with a common industry product. In addition, the cost of tolerance is calculated as common sense of the industry so as to select a manufacturing method and a test method, and the common canned product is produced. For example, a tolerance from a center of the bath to a center of the nozzle center is ±6mm according to the standard of Japan Petroleum Institute selected generally. Problems do not be generated in the tolerance not disturbing construction of the connected pipe.
However, when the shape of the bath is optimized to improve the cleaning ability, high measurement accuracy is required because of different problems.
There is a possibility that the status and existence rate of the dead area in cleaning considerably change by errors such as inclination.
It is difficult to provide accurate measurement for the nozzle which is mounted obliquely or has the taper pipe shape in manufacturing thereof, comparing the nozzle the same as described above with upstanding common nozzle. Also, it is difficult to confirm the accurate measurement. Since an object of requiring the high accuracy is removal of the dead area, there is little point in equally defining the measurement. However, when the cleaning without dead area is required in specifications of the product, when target finishing degree is confirmed by spray test at the time of completion of the product, producers and outsourcers produce the product with worries in the entire step.

As described above, in a case where it is difficult to provide the measurement accuracy for the product and to manufacture the product, it is necessary to have a proficiency above a predetermined level, and select the manufacturing method selected in many methods for the producers. Jigs designed for object achievement are developed as original know-how of the producers.
In present can manufacturing industry, it is common that can manufacturers have a small company scale, also, it is common that the products are ordered from companies having comparatively big scale by a competition estimate.
When comparing order quantity of the canned product with the entire production volume of the canned product, the canned product requiring the cleaning ability and mounting the spray nozzle thereon, the order quantity is not large. While the can manufacturers receive orders of various canned products from plural customers irregularly, some orders are allocated to manufacturing of machines requiring the cleaning ability.
In a viewpoint other than proficiency, it is preferable to produce the product by a predetermined limited producers. However, there is a danger that the entire price of the canned product optimized on improving cleaning ability becomes high without a competition principle. Further, when big plant constructions are performed domestically and simultaneously and most constructions require improvement of the cleaning ability, it is also conceivable a predetermined producers can't keep up with production.

In the bath, the nozzles such as manholes mounted on the upper specular plate mainly have problems of the cleaning ability of the spray nozzle in an empirical viewpoint. The nozzles are positioned above the spray nozzle which is a spray starting point of the cleaning solution, and the vertical distance thereof to the horizontal distance thereof is short. Accordingly, an input angle when the cleaning solution moves into the nozzle becomes small, so that it is easy to generate the dead area.
Since the nozzle mounted on the shell plate or the lower specular plate is located below the spray nozzle, cleaning spray speed does not decrease by gravity, and the cleaning solution flows downward on the surface thereof. Accordingly, it is easy to clean the surface. Without concerning whether the dead area is present or not, the cleaning ability is high.
Cleaning of the nozzle on the upper specular plate is not described in Patent Document 1.

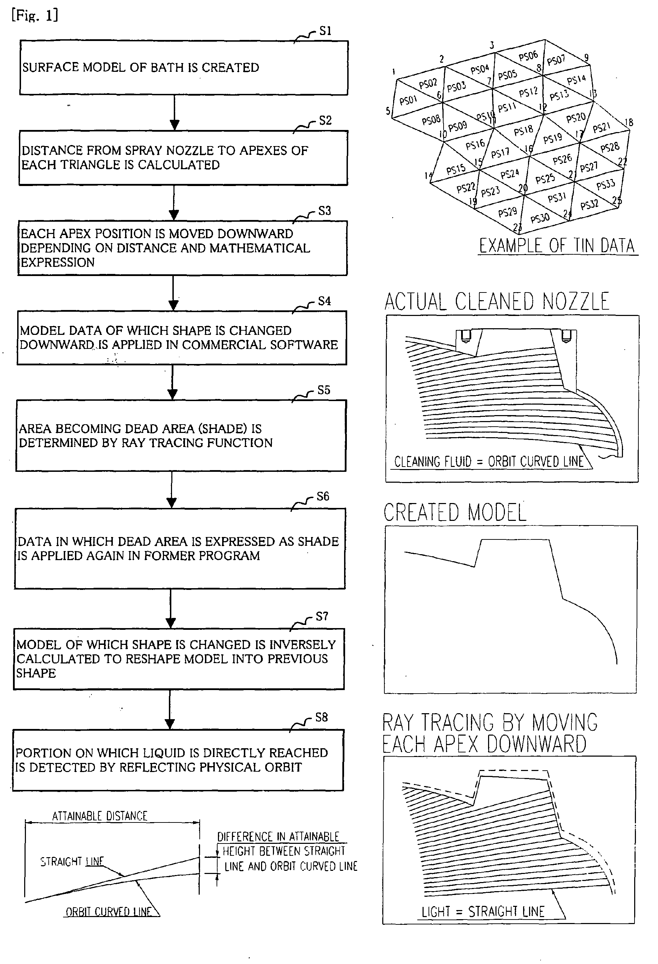

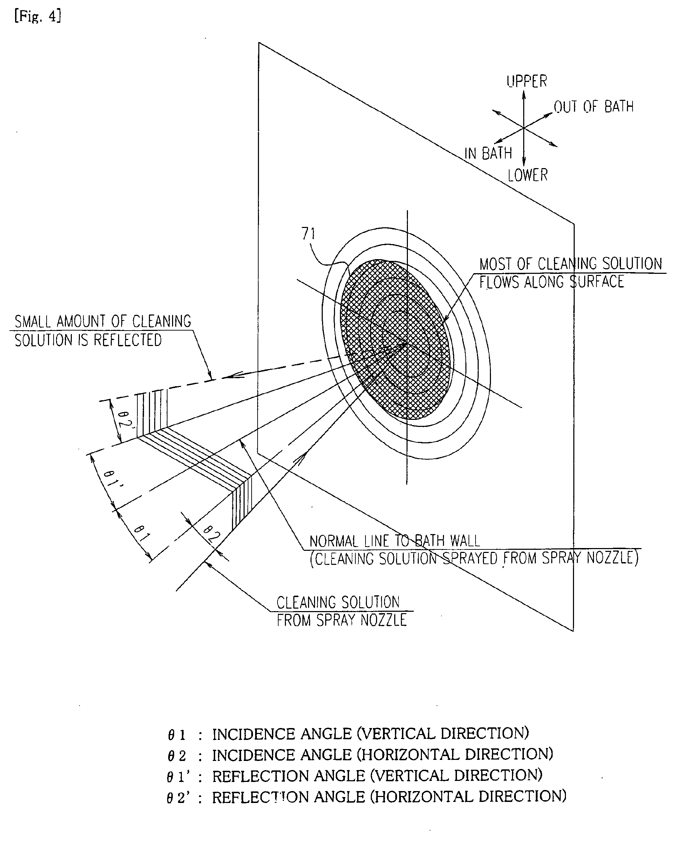

Patent Document 1: JP-A-9-117654 (Page 3 to 4, Fig. 1)
Patent Document 2: JP-A-2002-66471 (Page 2 to 3, Fig. 1)
Patent Document 3: JP-A-5-324798 (Page 4 to 5, Fig. 1)
Patent Document 4: JP-A-10-15479 (Page 4 to 9, Fig. 1)
Patent Document 5: JP-A-2003-285428 (Page 4 to 8, Fig. 4)
Patent Document 6: JP-A-8-206553 (Page 3 to 4, Fig. 1)

### Disclosure of the Invention

### Problem that the Invention is to solve

As described above, to improve cleaning ability of a bath, it is vital to remove dead area in unevenness portion in a design step of the bath.
Even if the dead area can be removed, it is important to obtain satisfactory spray density and spray speed of the sprayed object depending on distance between sprayed fluid and sprayed object and a collision angle in order to perform a satisfactory design.
Three-dimensional CAD and computer graphic type software are not used as design means for improving the spray ability of the bath except two or three examples at home and abroad. Even if these are used, it is impossible to reflect an orbit of the cleaning solution by gravity. It is also impossible to detect and reflect density and speed of the sprayed fluid. It is also impossible to reflect an orbit of the cleaning solution by gravity or detect the density and the speed of the sprayed fluid in case of coating spray or fire extinguishing. Accordingly, it is necessary to provide a design technique specialized in the problems described above. It is necessary to provide electronic processing technology for this.

In present fluidics, it is possible to simulate movement of spray solution moved in closed space and out of the space under a predetermined condition by computer simulation. However, development of computer simulation program requires vast development expense and very long time. Even if the program is completed, the program is operated only on expensive hardware such as super computers, and even if the program is operated on PC, simulation time is very long. Accordingly, the program is economically inefficient in a viewpoint of demands for this case.
Accordingly, it is necessary to develop a program capable of simplifying and abstracting sprayed state model, and performing a parallel computing process for economic simulation. When the program has a program structure capable of the parallel computing process with a plurality of computer, the program becomes a system which can be operated at low cost and perform simulation in practical time in a viewpoint of decline in stock prices of the PC.
Even if the parallel computing process is not required, and parallel computing process is not processed, when time to simulate becomes long, it is possible to detect sprayed state which cannot be realized by conventional techniques.

It is described that the design technique removing the dead area in the bath is necessary as described above. However, even if good techniques are introduced for the design technique, it is impossible to completely remove the dead area under restrictions such as pipe layout.
Accordingly, there are many problems even if various measures are implemented as described above. It is necessary to provide a dead area removing measure that does not cause contamination, with no reconstruction after completion and no increase of total amount of the cleaning solution.

When a shape of a canned product is optimized as a cleaned object to improve the cleaning ability, required measurement accuracy becomes high.
Accordingly, it is necessary to provide a production method and an ordering technique satisfying measurement accuracy.

When the shape of the canned product is optimized as the cleaned object to improve the cleaning ability, it is difficult to judge whether an object is achieved by conventional measurement check methods using conventional vernier caliper, tape measure, straight measure, angle gauge, etc. since a nozzle is obliquely mounted and has a taper pipe shape. The shape of the canned product is so complicated, it is not easy to measure the shape of the canned product, and it is difficult to set tolerance.
Accordingly, it is necessary to select or develop the some measurement check methods to judge achievement of the object.
For example, many systems have been developed to three-dimensionally detect the shape and make three-dimensional electronic data thereof by, for example, contact sensor, laser beam, electromagnetic wave, and CCD sensor. However, the machines described above are very expensive in present situation, and it is impossible to introduce the machines only for producing canned product requiring the cleaning ability in can manufacturer position.
Even if a spray nozzle is set to perform a spray test after product completion, it is necessary to provide a pump, flowmeter and temporary pipe, and vast amounts of cost and time are also required.

The can manufacturing industry does not introduce advanced production control techniques represented by, for example, automobile industry, is non-modern, and has low efficiency and low productivity.
Most can manufacturers have small companies, and assume competitive estimate when receiving an order. To stabilize of amount of order, it is necessary to provide various types of products requiring production know-how in heat exchangers, machinery containing stirrers, machinery containing jacket, or the like. In addition, general carbon steel, low steel alloy, steel alloy such as stainless steel, nonferrous metal, and the like are used as materials.
Since the products are produced one by one and there is no large scale or middle scale production, it is difficult to introduce the advanced production control system for large-scale production.

The present invention is to solve problems as described above.
A first object is to provide a fluid spray simulation method of verifying the spray ability of a sprayed object by means of the spray nozzle. A physical orbit of the fluid to be sprayed by the spray nozzle is reflected when verifying the spray ability of a sprayed object.
A second object is to provide a fluid spray simulation method of detecting spray density of the sprayed fluid and collision speed of the sprayed fluid with sprayed object.
A third object is to provide a fluid spray simulation method of verifying the spray ability of the sprayed object with the spray nozzle by reflecting reflection and dispersion of the sprayed fluid to be sprayed from the spray nozzle at the time of the collision with the sprayed object.
A fourth object is to provide the bath and the sprayed object of which unevenness portion that is apt to become the dead area is sprayed by the sprayed fluid of which the orbit thereof is changed. The orbit of the sprayed fluid sprayed from the spray nozzle is changed by shape specialization portion.
A fifth object is to provide the bath and the sprayed object in which a spray portion of the spray nozzle is obliquely formed to provide time difference when each sprayed fluid collides with the bath and the sprayed object, reduce interference of the sprayed fluid at the time of the collision, and change the orbit of the sprayed fluid depending on the shape specialization portion.
A sixth object is to provide the bath and the sprayed object in which when the bath and the sprayed object are in manufacturing step or completion check step, the shape of the object has three-dimensional model by means of three-dimensional measurement device, and fluid spray simulation to detect spray ability is performed to improve manufacturing yield and reliability of products shipped to buyer.
A seventh object is to provide a bath manufacturing method in which facility investment is performed intensively by increasing bath manufacturing chances and concentrating manufacturing know-how to improve product quality and cost performance. The bath is a bath having high cleaning ability and high difficulty in a viewpoint of manufacturing accuracy, of which an upper specular plate constituting the bath is manufactured by specialized companies.
And an eighth object is to provide the spray nozzle of which the spray portion is formed obliquely.

### Means for solving the Problem

According to a simulation method of the invention, a fluid spray simulation method of detecting a sprayed state of a sprayed object forming a three-dimensional space by the use of a device for spraying fluid on a plurality of positions spaced apart by different distances with a spray nozzle, the fluid spray simulation method comprises the steps of inputting three-dimensional shape data of the sprayed object, a position of the spray nozzle, and an initial speed of the fluid sprayed from the spray nozzle, calculating physical orbits of the fluid sprayed in spray directions from the spray nozzle on the basis of the data inputted in the step of inputting three-dimensional shape data, and calculating intersections between the calculated physical orbits of the fluid and the sprayed object.
Data representing sprayed positions of the fluid on the sprayed object is outputted.
The fluid spray simulation method of detecting the sprayed state of the sprayed object forming the three-dimensional space by the use of the device for spraying fluid on the plurality of positions spaced apart by different distances with the spray nozzle, the fluid spray simulation method comprises creating a model of the sprayed object, moving respective portions of the model of the sprayed object downward on the basis of the distances from the spray nozzle, calculating a shade portion which is formed when a light source is positioned at a position of the spray nozzle, returning the respective portions of the model of the sprayed object moved downward to include the shade portion, and detecting the shade portion.
In addition, according to the invention, a bath which sprays cleaning solution from the spray nozzle so as to clean the interior of the bath has a shape specialization portion adapted to change an orbit of the cleaning solution sprayed from the spray nozzle.
Further, the spray nozzle according to the invention, a slit spraying the cleaning solution is formed obliquely in a vertical direction.
In addition, for an upper specular plate designed in design steps of the upper specular plate constituting the bath in a bath manufacturing system according to invention, an operation to create a bath model is performed according to the fluid spray simulation method, cleaning ability of a first bath model created by the operation is verified by the fluid spray simulation method, the designed upper specular portion is manufactured, a shape of the manufactured upper specular portion is three-dimensionally detected, a step of creating a bath model is performed on the basis of the tree-dimensional shape detected according to the fluid spray simulation method, and cleaning ability of a second bath model created by the second bath model creating step is verified by the fluid spray simulation method.
The bath manufacturing system includes a first computer which is disposed for a first company designing the upper specular plate and designs the upper specular plate, and a second computer which is disposed for a second company professionally manufacturing the upper specular plate and is connected with the first computer through network. The first computer performs a step of creating a bath model by using the upper specular plate designed by the first computer according to the fluid spray simulation method and verifies cleaning ability of a first bath model created by the step by the fluid spray simulation method. After an upper specular plate is manufactured by the second company, the second computer three-dimensionally detects a shape of the manufactured upper specular plate, performs a step of creating a bath model on the basis of the three-dimensional shape detection according to the fluid spray simulation method, and verifies cleaning ability of a second bath model created by the step by the step by the fluid spray simulation method.

### Advantage of the Invention

According to the invention, a fluid spray simulation method of detecting a sprayed state of a sprayed object forming a three-dimensional space by the use of a device for spraying fluid on a plurality of positions spaced apart by different distances with a spray nozzle, the fluid spray simulation method comprises the steps of inputting three-dimensional shape data of the sprayed object, a position of the spray nozzle, and an initial speed of the fluid sprayed from the spray nozzle, calculating physical orbits of the fluid sprayed in spray directions from the spray nozzle on the basis of the data inputted in the step of inputting three-dimensional shape data, and calculating intersections between the calculated physical orbits of the fluid and the sprayed object. Data representing sprayed positions of the fluid on the sprayed object is outputted. Accordingly, it is possible to detect the sprayed state of the sprayed object in a form close to actuality.
The fluid spray simulation method of detecting the sprayed state of the sprayed object forming the three-dimensional space by the use of the device for spraying fluid on the plurality of positions spaced apart by different distances with the spray nozzle, the fluid spray simulation method comprises creating a model of the sprayed object, moving respective portions of the model of the sprayed object downward on the basis of the distances from the spray nozzle, calculating a shade portion which is formed when a light source is positioned at a position of the spray nozzle, returning the respective portions of the model of the sprayed object moved downward to include the shade portion, and detecting the shade portion. Accordingly, it is possible to simulate the sprayed state reflecting the physical orbit concerning an effect of the gravity of the fluid sprayed from the spray nozzle
In addition, the bath designed to clean inside of the bath by spraying the cleaning solution from the spray nozzle includes a shape specialization portion formed to change the orbit of the cleaning solution sprayed from the spray nozzle so as to improve cleaning ability of the bath.
A slit of the spray nozzle spraying the cleaning solution is formed oblique about a vertical direction, so that the sprayed fluid reaches the shape specialization portion of the sprayed object with time difference. Accordingly, there is no disturbance between the sprayed fluid, and the sprayed fluid is effectively reflected in an intended direction on the shape specialization portion, so that it is possible to spray the cleaning solution to a dead area formed by unevenness of the sprayed object, which can not be removed.
In addition, for an upper specular plate designed in design steps of the upper specular plate constituting the bath, an operation to create a bath model is performed according to the fluid spray simulation method, cleaning ability of a first bath model created by the operation is verified by the fluid spray simulation method, the designed upper specular portion is manufactured, a shape of the manufactured upper specular portion is three-dimensionally detected, a step of creating a bath model is performed on the basis of the tree-dimensional shape detected according to the fluid spray simulation method, and cleaning ability of a second bath model created by the second bath model creating step is verified by the fluid spray simulation method. Accordingly, it is possible to boost manufacturing yield of the bath.
The bath manufacturing system includes a first computer which is disposed for a first company designing the upper specular plate and designs the upper specular plate, and a second computer which is disposed for a second company professionally manufacturing the upper specular plate and is connected with the first computer through network. The first computer performs a step of creating a bath model by using the upper specular plate designed by the first computer according to the fluid spray simulation method and verifies cleaning ability of a first bath model created by the step by the fluid spray simulation method. After an upper specular plate is manufactured by the second company, the second computer three-dimensionally detects a shape of the manufactured upper specular plate, performs a step of creating a bath model on the basis of the three-dimensional shape detection according to the fluid spray simulation method, and verifies cleaning ability of a second bath model created by the step by the step by the fluid spray simulation method. The upper specular plate of the bath requiring high cleaning ability is manufactured by the second company which is a specialized maker, so that manufacturing and inspection materials to be required for improvement of the cleaning ability is concentrated on the second company. Accordingly, it is possible to decrease facility investment cost. It is also possible to decrease manufacturing cost and improve product quality by proficiency in manufacturing and introducing of advanced production control technique.

### Embodiment 1

In Embodiment 1, cleaning ability of a bath is verified by reflecting a physical orbit of cleaning solution by means of a simulation method of the invention so as to clarify an area on which the cleaning solution is reached.
Fig.1 is a diagram illustrating a flow of a cleaning solution simulation method with reference to the Embodiment 1 of the invention.

The bath is described with reference to Fig. 1 as a cleaned object.
At first, a surface model (a shell model having no thickness) on electronic data of the bath is created (Step S1). Data form is TIN data constituted by minute triangles and each coordinate of apexes thereof. The TIN data is applied in a program made by a general-purpose language such as machine language, FORTRAN and C++ to calculate distances from a spray nozzle to the apexes of each triangle (Step S2). The program moves the apexes of each triangle slightly downward depending on a predetermined mathematical expression (gravity orbit, etc.) and distance from the spray nozzle (Step S3). As a result, the surface model has a shape different from the original shape, and has a shape slightly lowering downward as the surface model is farther from the spray nozzle.

The surface model changed by the program is applied in a commercially available software having a ray tracing function (a function to detect a reflection of light on a surface of the model based on a predetermined calculation), such as a three-dimensional CAD or a computer graphic type software (Step S4). The position of the spray nozzle is considered as a light source so as to perform the ray tracing calculation determining an area becoming a dead area (shadow) (Step S5).
Data in which the dead area is expressed as the shadow after performing the ray tracing calculation is applied in the program (Step S6), and the data moved downward based on the mathematical expressions and the distances as well as the portion in which the ray tracing calculation is performed is reshaped into their previous shape (Step S7).
The reshaped data is applied in the commercially available software again and visualized, thereby an area which is directly cleaned by the spray nozzle being confirmed by a form reflecting a physical orbit such as gravity (Step S8). By using the simulation method, it is possible to detect the area cleaned by spraying the cleaning solution.

According to Embodiment 1, by using the simulation method which is operated on an inexpensive hard system and finishes the calculation in a short simulation time, it is possible to realize a cleaning simulation which very inexpensively and easily reflects the physical orbit, and perform a shape design of the cleaned object economically.

### Embodiment 2

Reflection, speed and density of the cleaning solution are not considered in Embodiment 1. However, the reflection, speed and density of the fluid are considered and the cleaning solution simulation is performed in Embodiment 2.

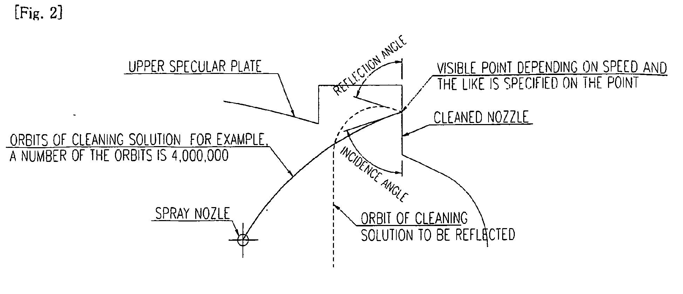

Fig.2 is a diagram illustrating a representative orbit of the cleaning solution in the cleaning solution simulation method with reference to Embodiment 2 of the invention.
In Fig. 2, 2, 4 and 6 are the same as reference numerals in Fig. 23. Cleaning solution 31 sprayed from a spray nozzle 4 draws an orbit in full line, collides with an inner wall surface of the bath, is reflected on the inner wall surface of the bath, and draws an orbit indicated by a dotted line as reflected cleaning solution 61. A number of the orbits of the cleaning solution 31 are, for example, 4,000,000.

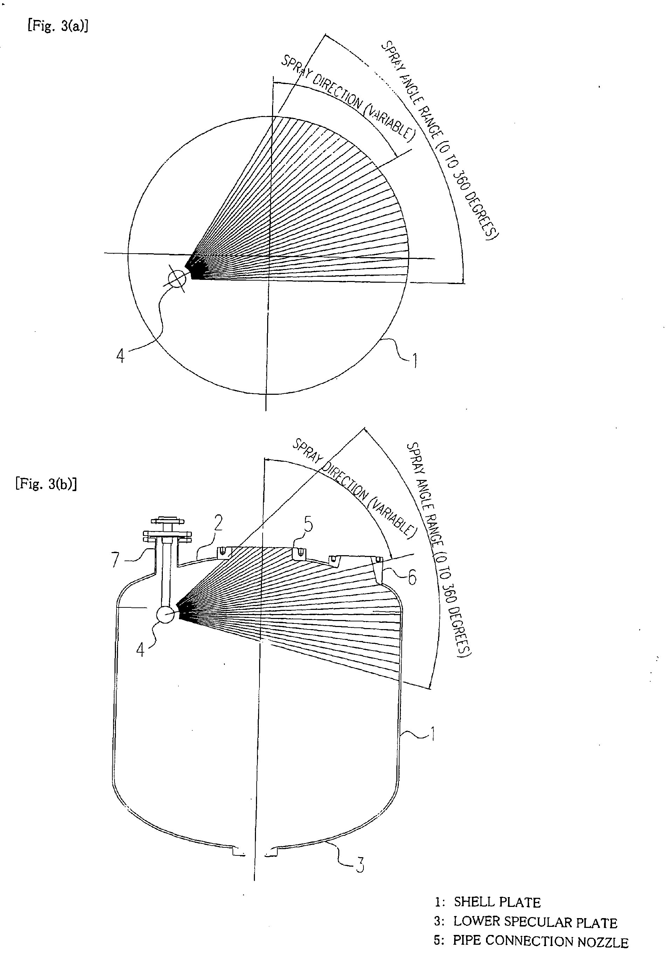

Fig. 3 is diagrams illustrating a spray direction and a spray range of the spray nozzle with reference to Embodiment 2 of the invention. Fig. 3(a) illustrates a horizontal cross-section of the bath, and Fig. 3(b) illustrates a vertical cross-section of the bath.
In Fig. 3, an upper specular plate 2 and a lower specular plate 3 are mounted on a shell plate 1 of the bath, and the upper specular plate 2 is provided with a pipe connection nozzle 5, a pipe connection nozzle 6 and a spray nozzle seat 7. The spray nozzle 4 spraying the cleaning solution is mounted on the spray nozzle seat 7. The spray direction and a spray angle range of the cleaning solution are illustrated in Fig. 3. For example, the spray angle range can be 360°. In a case where the spray angle range is 360°, it is possible to jet the cleaning solution in all directions.

Fig. 4 is a diagram illustrating dispersion of the cleaning solution when the cleaning solution collides with a bath wall with reference to Embodiment 2 of the invention.
In Fig. 4, when cleaning solution collides with the bath wall at incidence angles θ1 (vertical direction) and θ2 (horizontal direction), small amount of the cleaning solution is reflected at reflection angles θ1 '(vertical direction) and θ2' (horizontal direction), and most cleaning solution flows on a bath wall surface as the dispersed cleaning solution 71.

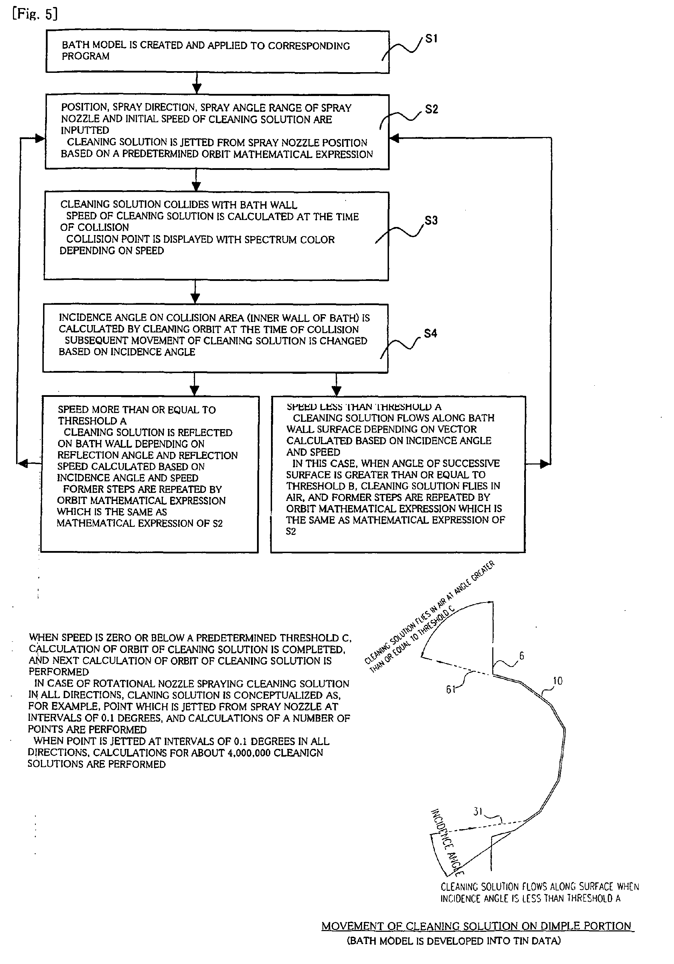

Fig. 5 is a flow chart showing a flow of the cleaning solution simulation method with reference to Embodiment 2 of the invention.

### Operations will be described as follows.

Hereinafter, a flow of the simulation method of Embodiment 2 in outline is described as follows.
(1) (Step S1, First Step) First, a bath model is created. The model may be the surface model, or may be a solid model which is previously created to apply the same in a stress analysis program (a model having thickness as material). The data form may be the TIN data, or may be surface data having data for a surface such as a globe or a cylinder. When the data form is the TIN data, the TIN data is inferior in simulation accuracy and calculation time. When the data form is the surface data, geometric equation for setting a reflection angle is required at every shape of the surface. Accordingly, the program becomes complicated, and the calculation speed increases.
(2) The data are applied in the program made by languages such as the machine language, FORTRAN, C++, VBA and LISP.
(3) (Step S2, Second Step) The cleaning solution is conceptualized as a point having a predetermined vector and initial speed from the spray nozzle. The points having a predetermined mathematical expression orbit is jetted at arbitrary intervals, for example, 0.1 degrees in each direction. When the point is jetted at 0.1 degree intervals in all directions, a number of the jetted cleaning solution becomes about 4,000,000.
   The program sequentially simulates the orbits of the 4,000,000 cleaning solution as follows. In the program, "arbitrary interval such as 0.1 degree" is synonymous with "spray density of the sprayed fluid".
   The cleaning solution is conceptualized in this way. The orbit calculations to be sequentially performed are divided into a plurality of hardware, thereby enabling parallel computing process simply.
(4) The jetted cleaning solution draws orbits according to the mathematical expressions, and collides with the bath wall.
(5) (Third Step) The speed of the cleaning solution at the time of the collision is calculated based on collision positions and distances from the spray nozzle.
(6) (Fourth Step) The orbits of the cleaning solution and the incidence angle of collision areas at the time of the collision are calculated.
   The incidence angle provides one or more thresholds so as to set movements of the cleaning solution at the incidence angle. Cleaning solution having thresholds less than or equal to a predetermined threshold flows on the bath wall surface, and cleaning solution having thresholds higher than or equal to the predetermined threshold is reflected on the bath wall, and draws a predetermined physical orbit in the air again at an angle according to the predetermined mathematical expressions based on the incidence angle while the cleaning solution flies.
   In any case, the speed of the cleaning solution decreases depending on the incidence angle and collision speed at the time of the collision. When the cleaning solution flows on the bath wall surface, the speed of the cleaning solution decreases based on the mathematical expressions reflecting the conditions such as the gravity or friction depending on the vector.
(7) There are cases where the cleaning solution flowing on the bath wall surface flies again in the air at the vector of the cleaning solution of the moment from areas having change angles higher than or equal to the predetermined threshold depending on the change angle of the bath wall surface. When the cleaning solution has sufficient speed at that moment, the cleaning solution draws orbits by the same rule as the rule of the initial collision while colliding with other bath surfaces to clean the surfaces
(8) Finally, the speed of the cleaning solution gradually decreases, and the cleaning solution falls on an upper portion of the bath. The speed of the falling cleaning solution increases by the gravity, thereby the cleaning solution being reflected again. When the speed is zero or less than a predetermined threshold, the calculation of the orbit of the cleaning solution is completed, and next calculation of the orbit of the cleaning solution is performed.
(9) As described above, when the cleaning solution is jetted at the interval of 0.1 degree in all directions, these steps are repeated about 4,000,000 times.
   The physical orbit of the cleaning solution calculated in the steps can be adjusted by experimental values. The physical orbit of the cleaning solution can be adjusted by the experimental values when the speed of the cleaning solution decreases or the direction of the cleaning solution is changed by influences of gas in which the cleaning solution passes through.
   Calculation results for more accurate physical orbit are obtained by the adjustment.

A flow of the simulation method of the cleaning solution of Embodiment 2 is described with reference to Fig. 5.
The bath model is created and applied in the program (Step S1). The position, the spray direction and the spray angle range of the spray nozzle, and the initial speed of the cleaning solution are inputted (data input step). The cleaning solution is jetted from the spray nozzle position based on a predetermined orbit mathematical expression (Step S2).
The cleaning solution collides with the bath wall. The speed of the cleaning solution at the time of the collision is calculated (Step S3, Fifth Step). A collision point is displayed with a spectrum color depending on the speed thereof. By the cleaning orbit at the time of the collision, an incidence angle to the collision area (the inner wall of the bath) is calculated (Step S4). The movement of the cleaning solution thereafter changes by the incidence angle.
At the speed higher than or equal to the threshold A, the cleaning solution is reflected on the bath wall depending on the incidence angle, reflection angle calculated on the basis of the speed, and reflection speed.
The former steps are repeated by an orbit mathematical expression which is the same as the mathematical expression of Step S2 (Step S5). At the speed less than the threshold A, the cleaning solution flows on the bath wall surface at the vector calculated on the basis of the incidence angle and the speed (Fifth Step). In this case, when an angle of a successive surface is greater than or equal to threshold B, the cleaning solution flies in the air again, and the former steps are repeated by an orbit mathematical expression which is the same as the mathematical expression of Step S2 (Step S6).
When the speed is zero or below a predetermined threshold C, the calculation of the orbit of the cleaning solution is completed, and next calculation of the orbit of the cleaning solution is performed.
In a case of a rotational nozzle spraying the cleaning solution in all directions, the cleaning solution is conceptualized as, for example, a point which is jetted from the spray nozzle at intervals of 0.1 degrees, and calculations of a number of points are performed. When the point is jetted at the intervals of 0.1 degrees in all directions, about 4,000,000 calculations are performed.

When visualizing the cleaning ability, as generally employed in the simulation method, the collision speed on the collision point of the cleaning solution and the bath wall surface is substituted for each color of sun spectrum to represent the speed. In case of density, for example, dense collision points of 4,000,000 (intersection points) represents the density. When the cleaning solution flows on the bath wall surface, the orbit of the cleaning solution is expressed as a line, and flow speed is indicated by color. It is not necessary to visualize a fly orbit in the air except for a case of business demonstration use.
When detecting the density, a number of the intersections between the cleaning solution (fluid) and the bath (sprayed object) per a unit area of each portion of the bath is calculated, whereby it is possible to detect the spray density of the cleaning solution on each portion of the bath from a relation between total amount of the cleaning solution from the spray nozzle and the number of the intersections between the fluid and the bath per a unit of area of the bath. When average speeds at the collision points and the number of the collision points on each portion of the bath per a unit area of the bath (sprayed object) are calculated, it is possible to numerically know cleaning intensity of the portion.
For example, when a plurality of two-dimensional rotational spray nozzles are provided on the bath, the simulations are performed as many as the number of the spray nozzles, and all results of the simulations are synthesized to visualize a state that the plurality of two-dimensional rotational spray nozzles jet the cleaning solution from individual positions simultaneously.
The cleaning solution is substituted for the moving point to visualize the speed and the density of the cleaning solution, and visualize the cleaning intensity easily.

Only spraying from the arbitrary spray nozzle is displayed on the screen or is removed from the screen by applying identification data for each model referred to as a layer to individual models before synthesizing. Whereby, it is possible to visualize a corresponding area cleaned by a spray nozzle.

In Embodiment 2, as shown in Fig. 3, it is possible to handle various types of the spray nozzles by inputting and setting numeric values of the jet direction and the spray angle range of the cleaning solution from the spray nozzle 4 before performing the simulation.
For example, it is also possible to handle a spray nozzle type including a plurality of small conical jet fixed nozzles, which is available in the market as shown in Fig. 2. The simulations are performed as many as a number of the small conical jet fixed nozzles, and all results of the simulations are synthesized to complete one model. Accordingly, it is possible to visualize a state that the bath is cleaned by jetting the cleaning solution from the plurality of nozzles simultaneously.
In Embodiment 2, when the spray angle range is narrowed to provide a spray form nearly a straight line such as a laser beam, and a jet starting position and a spray direction are moved on a preliminarily setted orbit, it is also possible to handle a three-dimensional rotational spray nozzle and an up-and-down moving spray nozzle as shown in Fig. 22.

Some cleaning solution which collides with the bath wall surface is reflected to fly in the air again, and most cleaning solution flows on the bath wall surface depending on the speed, vector, incidence angle and gravity direction at the time of the collision for dispersion of the cleaning solution as shown in Fig. 4
In Embodiment 2, the cleaning solution is conceptualized as the moving point. Accordingly, it is possible to visualize the area having cleaning effect by the dispersion of the cleaning solution as points or surfaces by calculating these all conditions at the time of the collision. As dispersion conditions, roughness and hardness of the collision surface influence the dispersion. However, the conditions can be ignored in a viewpoint of the object of the program.

When the cleaning solution flying in the air collides with a solid object at an incidence angle greater than or equal to a predetermined value, most cleaning solution is not reflected and dispersed on the bath wall surface. In Embodiment 2, it is possible to simulate an orbit of the cleaning solution by setting the incidence angle threshold and the orbit rule thereafter, which are described above, in the program as shown in Fig. 4.

Since the object of the simulation method in Embodiment 2 is not a perfect simulation but a simulation conceptualized and abstracted to complete the calculation on economically usable hardware in practical simulation time. Accordingly, it is not necessary to include all the above-mentioned functions.
Depending on a single PC or parallel PCs, the number of PCs, and a balance between the processing abilities of the hardware and the simulation time, for example, the calculation for dispersion of the cleaning solution dispersed on the bath wall surface at the time of the collision may be omitted. Only the calculation for dispersion of the cleaning solution dispersed on the bath wall surface may be performed. The necessities of the calculations are determined as tools to improve the cleaning ability in the bath.
It is possible to simulate difficult-to-realize reflection, speed and to realize in Embodiment 2.
Accordingly, it is possible to describe the cleaning ability more clearly. However, the program for the simulation has a big size, so that the simulation time is longer than the simulation time in Embodiment 1.

According to Embodiment 2, since the fluid spray simulation method is used to detect the reflection after the cleaning solution collides with the bath wall, cleaning solution fly speed an cleaning solution distribution density at the time of the collision, so that it is possible to realize cleaning ability optimization of cleaned object at a high level.

### Embodiment 3

In Embodiment 3, a shape specialization portion which is formed by deforming and specializing a shape of a part of the bath wall changes the orbit of the cleaning solution and supply the cleaning solution to the cleaned portion so as to improve the cleaning ability of the bath by using the spray nozzle.

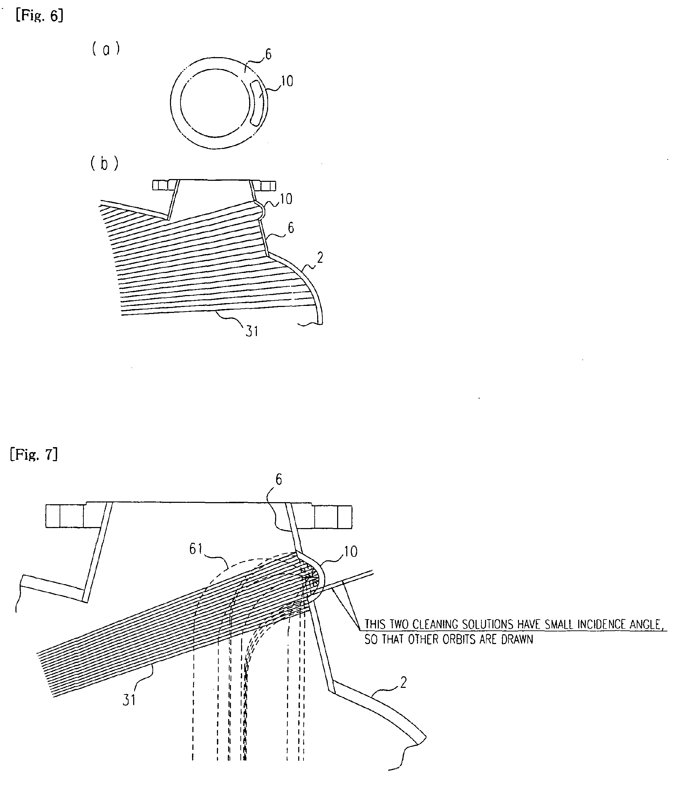

Fig. 6 is diagrams illustrating a bath of which the shape of the part of bath wall is deformed and specialized with reference to Embodiment 3 of the invention. Fig. 6 (a) is a diagram illustrating a horizontal cross-section of the bath, and Fig. 6(b) is a diagram illustrating a vertical cross-section of the bath.
In Fig. 6, 2, 6 and 31 are the same as the reference numerals in Fig. 23. A dimple 10 (the shape specialization portion) of which the shape is deformed and specialized is provided on a pipe connection nozzle 6 to change the orbit of the cleaning solution and supply the cleaning solution to the cleaned portion.
Fig.7 is a diagram illustrating cleaning solution reflected on a portion which is formed by deforming and specializing the shape of the part of bath wall with reference to Embodiment 3 of the invention.
In Fig. 7, 2, 6, 10 and 31 are the same as the reference numerals in Fig. 6. An orbit of cleaning solution 61 reflected on the bath wall surface is indicated by a dotted line.

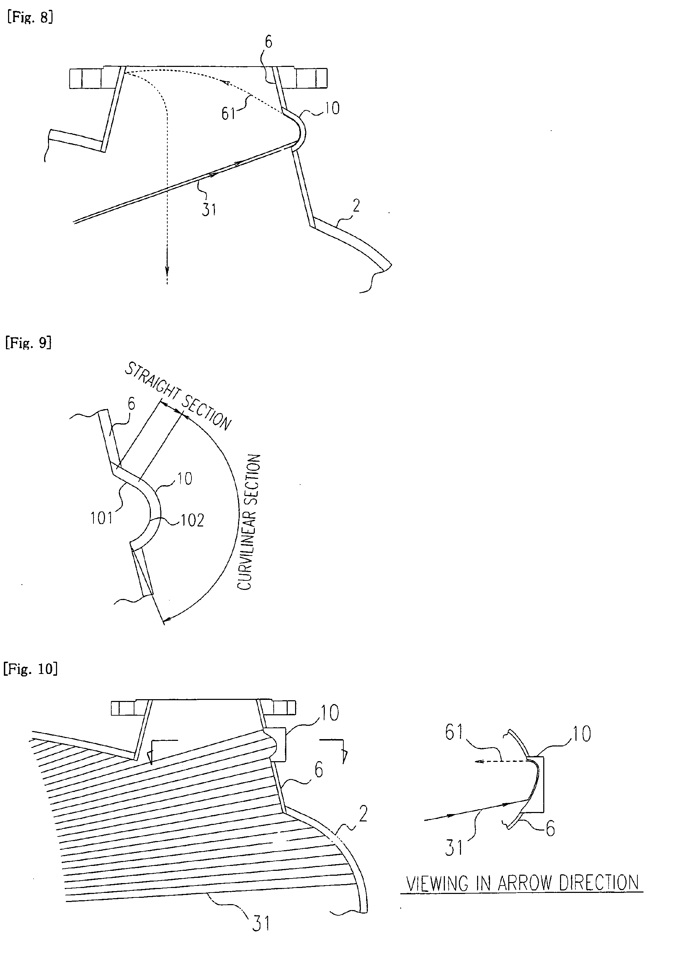

Fig. 8 is a diagram illustrating cleaning solution reflected on the portion which is formed by deforming and specializing the shape of the part of bath wall with reference to Embodiment 3 of the invention.
In Fig. 8, 2, 6, 10 and 31 are the same as the reference numerals in Fig. 6. Dead area of the pipe connection nozzle 6 is cleaned by the cleaning solution 61 which is cleaning solution 31 reflected on the dimple 10.
Fig. 9 is an enlarged view illustrating the portion which is formed by deforming and specializing the shape of the part of bath wall with reference to Embodiment 3 of the invention.
In Fig. 9, the dimple 10 includes a straight line section 101 and a curved line section 102.
Fig. 10 is an enlarged view illustrating movement of the cleaning solution reflected on the portion which is formed by deforming and specializing the shape of the part of bath wall with reference to Embodiment 3 of the invention.
In Fig. 10, 2, 6, 10 and 31 are the same as the reference numerals in Fig. 6. The cleaning solution 61 reflected on the dimple 10 at high collision speed is shown.

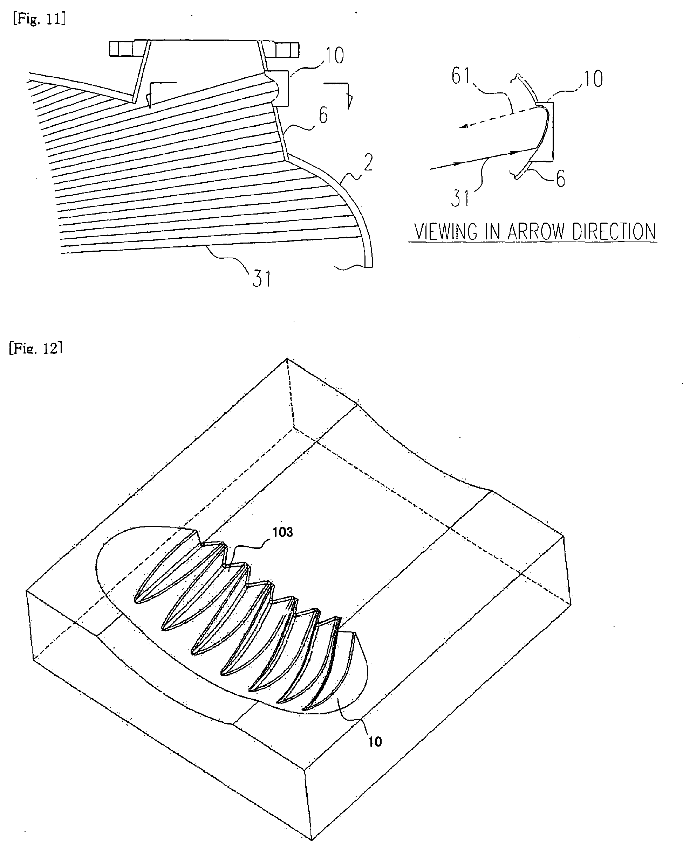

Fig. 11 is an enlarged view illustrating another movement of the cleaning solution reflected on the portion which is formed by deforming and specializing the shape of the part of bath wall with reference to Embodiment 3 of the invention.
In Fig. ll, 2, 6, 10 and 31 are the same as the reference numerals in Fig. 6. The cleaning solution 61 reflected on the dimple 10 at slow collision speed is shown.

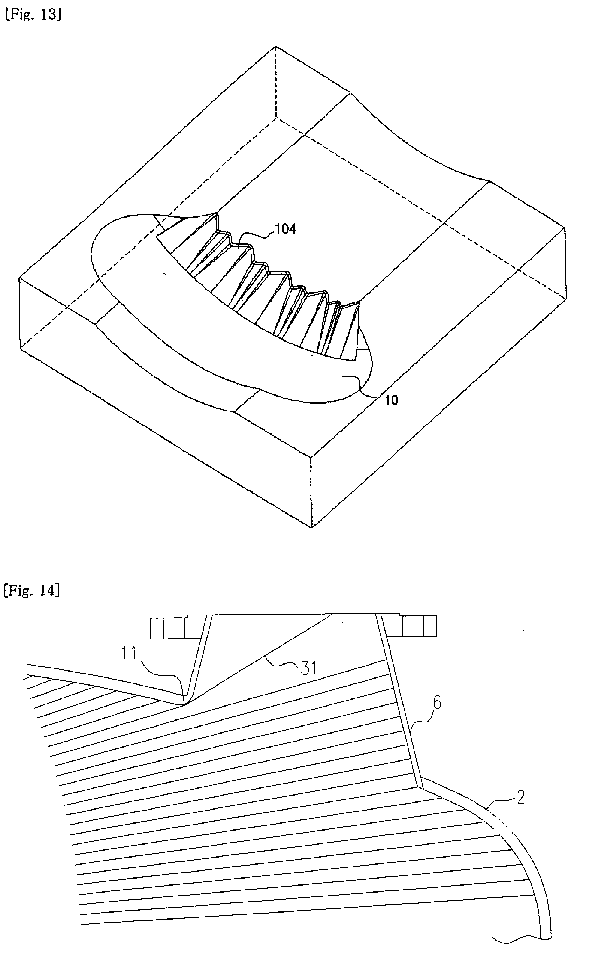

Fig. 12 is a diagram illustrating slits provided on the portion which is formed by deforming and specializing the shape of the part of bath wall with reference to Embodiment 3 of the invention.
In Fig. 12, recesses 103 are provided on the dimple 10.
Fig. 13 is a diagram illustrating fins provided on the portion which is formed by deforming and specializing the shape of the part of bath wall with reference to Embodiment 3 of the invention.
In Fig. 13, fins 104 are provided on the dimple 10.

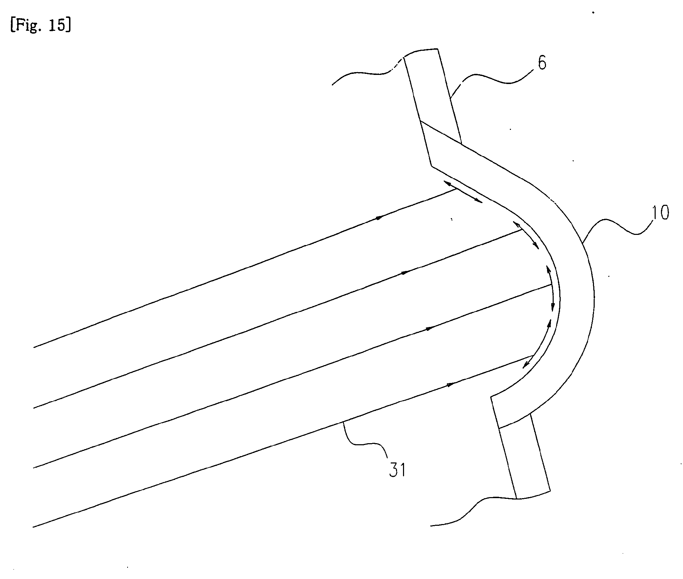

Fig. 14 is a diagram illustrating a portion which is formed by deforming and specializing the shape of the part of bath wall to change the orbit of the cleaning solution with reference to Embodiment 3 of the invention.
In Fig. 14, 2 and 6 are the same as the reference numerals in Fig. 6. A convex-curved surface portion 11 (the shape specialization portion) is provided to change the orbit of the cleaning solution 31.
Fig. 15 is a diagram illustrating dispersed cleaning solution state on the portion which is formed by deforming and specializing the shape of the part of bath wall with reference to Embodiment 3 of the invention.
In Fig. 15, 6, 10 and 31 are the same as the reference numerals in Fig. 6.

### Operations will be described as follows.

When the cleaning solution which is jetted and flies from the spray nozzle does not have considerable speed, the cleaning solution is not sufficiently reflected but is dispersed on the collision surface on a planar surface, a cylindrical surface, a conical surface, etc. having simple shapes, for example, as a rubber ball.
Accordingly, when small amount of the reflected cleaning solution collides with the collision surface, the speed thereof remarkably decreases.
However, when the cleaning solution collides obliquely with a reflection surface at a small incidence angle, not perpendicularly, the cleaning solution flows on the collision surface depending on the vector before the collision without remarkable speed decrease. Using a property of the cleaning solution as described above, the cleaning solution collides at the small incidence angle and flows on the curved surface. Accordingly, the vector thereof is changed, thereby enabling the cleaning solution to fly again toward an arbitrary portion.
When a shape of the reflection portion is carefully specialized, it is possible to clean the dead area using the operations.
In Embodiment 3, the shape of the reflection portion is specialized as described above.

Even if the shape specialization portion (a dimple having a concave-curved surface or the convex-curved surface portion) has a simple shape such as, for example, an inner side of a spoon or an inner side of an egg for cooking, the shape specialization portion has an higher effect to increase the reflection than the reflection on the conical surface which has the simple shape and is not specialized.

As shown in Fig. 9, when a portion adjacent to a target on a cross-section of the dimple 10 has a straight line shape as the straight line section 101, it is possible to specify easily a reflection direction by using the dimple 10 so as to reduce the speed decrease on the curved line.
Fig. 10 and Fig. 11 show movement of the cleaning solution 61 to be reflected depending on the speed of the cleaning solution 31 at the time of the collision. The cleaning solution 61 reflected as shown in Fig. 11 moves downward when the speed of the cleaning solution decreases at the time of the collision.

As shown in Fig. 12 and 13, when recesses 103 and fins 104 are provided to narrow a flow passage as the shape of the dimple 10 closes to a cleaning target, the reflection effect increases and consistency improves for the reflection direction.

Using a fluid reflection property showing the orbit as shown in Fig. 14, it is possible to change the orbit of the cleaning solution so as to improve the cleaning ability by specializing a shape of a convex portion in response to the object (it may not be suitable to call such a phenomenon the reflection. However, it is called generally as the reflection for convenience.).
For example, when curvature radius R generally having a size of 1 to 2mm (the radius at the time of rounding an angle) of an angular portion provided in the manhole has a big convex-curved surface of which size is 5mm, it is possible to change the cleaning orbit so as to decrease or remove the dead area.

Independently, Embodiment 3 has an effect on improvement of the cleaning ability. However, using simultaneously the simulation methods in Embodiment 1 and 2, it is possible to improve the effect and accuracy. That is, it is possible to design the bath by reflecting the verification result of the cleaning ability by using the simulation method, and verify the cleaning ability by using the simulation method.

In Embodiment 3, the best mode for a case where the reflection on the dimple 10 shown in Fig. 9, 12 and 13 is used by using the two-dimensional rotational spray nozzle provided with the slit shown in Fig. 20(b) is described.
Generally, a slit type two-dimensional rotational spray nozzle is cut in the vertical direction, and cleans the interior of the bath in a form that a fan is stood vertically and rotated horizontally. There is a spray nozzle for spraying the cleaning solution in the fan form by using an exclusive spray orifice without the slit. A direction of the fan is the vertical direction in this case. Hereinafter, the slit is described as follows.
When the slit is cut in the vertical direction, the horizontally rotated cleaning solution is sprayed and reaches upper portions and lower portions of a cross-section of the dimple almost simultaneously. The cleaning solution colliding with the upper portions is dispersed on the collision surface from right to left or up and down.
The cleaning solution reaching the lower portion of the cross-section of the dimple flows on the surface depending on the dimple shape and moves upwardly so as to move toward a target direction. The cleaning solution reaching the upper portions of the cross-section of the dimple collides at vector almost vertical to the surface. Accordingly, the cleaning solution may flow on the surface from right to left or up and down. A downward flow of the flows collides with the cleaning solution which reaches lower portions of the cross-section of the dimple and flows upwardly so as to disturb the flows (see Fig. 15).

To prevent the disturbance, when the slit is cut obliquely, not vertically, a predetermined amou-nt of the cleaning solution reaches the lower portions of the dimple always before the horizontally rotated cleaning solution reaches the upper portion of the dimple.
Accordingly, it is possible to generate collision time difference of the cleaning solution on the upper and lower portions of the dimple. Since the cleaning solution reaching the lower portions of the dimple is not disturbed by the time difference, the cleaning solution can move toward the target. Accordingly, the amount of the cleaning solution to move toward the target increases so as to improve the effect of the dimple.
Even if the dimple is not used, when the cleaning solutions are not disturbed each other and the cleaning solutions are reflected freely or dispersed on the surface by making the slit oblique, the dead area can be cleaned. However, when the dimple is actively used to reflect the cleaning solution, making the slit oblique becomes more effective. In addition, when a slit of the two-dimensional spray nozzle is cut obliquely, it is useful that the horizontal rotation speed of the spray nozzle decreases.

According to Embodiment 3, the orbit of the cleaning solution is changed by the shape specialization portion provided in the bath. Accordingly, the dead area of the bath is cleaned by the cleaning solution of which the orbit is changed.
Since the shape of the part of the bath is changed and specialized to actively reflect the cleaning solution of a predetermined nozzle in order to remove the dead area, it is possible to manufacture a sanitary bath having high cleaning ability without increasing contamination sources such as addition of small spray nozzles or cleaning solution pipes.

### Embodiment 4

In Embodiment 4, the cleaned portion is cleaned by reflecting the cleaning solution by using a reflection plate rotated by the stirring shaft.

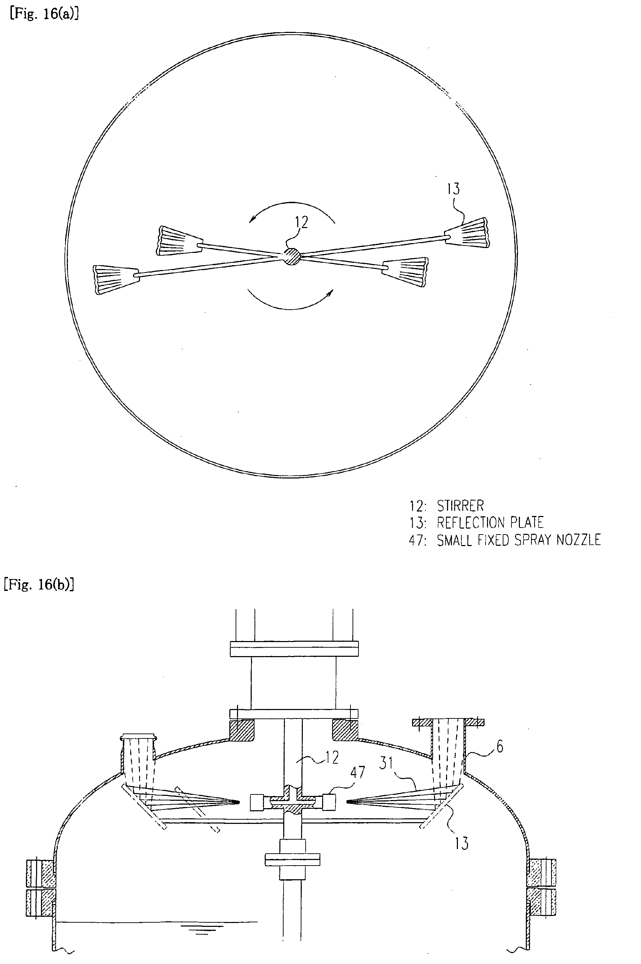

Fig. 16 is a diagram illustrating bath cleaning by the use of a hollow stirring shaft and reflection plates with reference to Embodiment 4. Fig. 16 (a) is a diagram illustrating the horizontal cross-section of the bath and Fig. 16(b) is a diagram illustrating the vertical cross-section of the bath.
In Fig. 16, 2, 6 and 31 are the same as the reference numerals in Fig. 2. A hollow stirring shaft 12 is connected with a reflection plate 13, and a small fixed spray nozzle 47 connected with the stirring shaft 12 is provided on a reflection plate 13. The small fixed spray nozzle 47 and the reflection plate 13 form a pair.

When the bath has a stirrer, a cleaning method with reference to Embodiment 4 can be performed.
By using a commercially available rotary joint (a device which can send fluid pressured on a hollow portion of a shaft to be rotated by the use of mechanical seals), Cleaning solution 31 injected into the stirring shaft 12 is sprayed from the small fixed spray nozzle 47 provided on the stirring shaft 12 in the bath to the interior of the bath.
The sprayed cleaning solution 31 collides with the reflection plate 13 which is connected with the stirring shaft 12 and rotates in phase the same as the phase of the stirring shaft 12. The cleaning solution 31 having the vector and the speed which is changed by the reflection plate 13 depending on speed, vector and collision incidence angle of the cleaning solution 31 at the time of the collision thereof moves again in the air.

As described above, when spraying the cleaning solution 31 in a wide-angly dispersed form such as a fan form or a conical form, density and speed of the cleaning solution 31 decreases easily in proportion to distance, and it is difficult to realize sufficient reflection. However, when spraying the cleaning solution 31 in a straight line form or narrow-angly conical form, there is little decrease of the density and speed of the cleaning solution 31, and it is possible to realize the sufficient reflection.
As shown in Fig. 16, the reflection plate 13 has a surface shape specialized in response to the object and efficiently reflects the cleaning solution 31 toward the target as in the case of the shape specialization portion. Position, shape, and inclination of the reflection plate 13 can be detected by a theoretical analogy and an experiment. However, when using the simulation method shown in Embodiment 2, the shape of the reflection plate 13 can be detected economically and accurately.

In Embodiment 4, in order to balance torque of the stirring shaft 12, the cleaning solution 31 is sprayed in the air from at least two small fixed spray nozzle 47 connected with the stirring shaft 12.
The sprayed cleaning solution 31 is reflected on the reflection plate 13 which is connected with the stirring shaft 12 and is rotated in phase the same as the phase of the stirring shaft 12, and supplied to the cleaned portion. The small fixed spray nozzle 47 and the reflection plate 13 form a combination of the at least two pairs to be used.

There is no need for forming one pair with only one reflection plate. A plurality of reflection plates and the small fixed spray nozzle can form one pair depending on a number of targets.

The cleaning of the entire bath cannot be completed only with the combination of the small fixed spray nozzle 47 and the reflection plate 13 in Embodiment 4. It is an object to clean each nozzle which is mounted on the upper specular plate and easily forms the dead area.
To ensure the cleaning of the entire bath, it is necessary to mount the spray nozzle such as the extra two-dimensional rotational spray nozzles, or provide the small fixed spray nozzles on each portion of the bath by forming the stirring shaft hollowly as shown in Patent Document 1.

However, the forming the entire stirring shaft hollowly is not desirable in an economical viewpoint and a viewpoint of the cleaning intensity as shown in Patent Document 1. Increase of the small fixed spray nozzle leads to increase of the contamination source, so that it is not sanitary. Accordingly, additional mounting of the two-dimensional rotational spray nozzle, etc. is the best mode.

According to Embodiment 4, it is possible to clean the nozzle (unevenness portion) in the bath by using the small fixed spray nozzle provided on the stirring shaft and the reflection plate.
Accordingly, it is possible to remove the dead area so as to improve the cleaning ability in the bath having the stirrer, without expensively forming each nozzle on the upper specular plate having a taper pipe shape.

### Embodiment 5

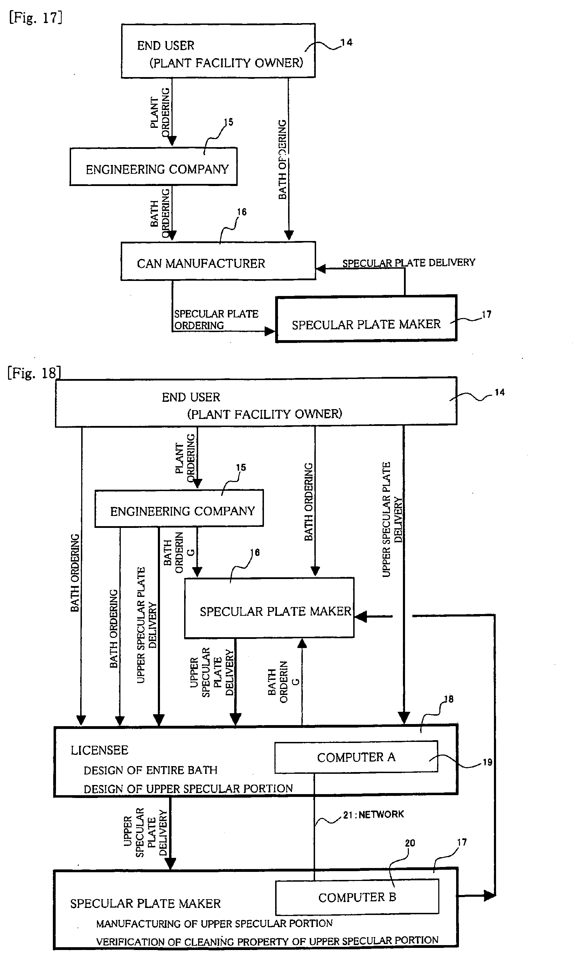

Fig. 17 is a diagram illustrating a general canned product ordering steps.
In Fig. 17, an end user 14 which is a plant facility owner places an order for a plant with an engineering company 15. The engineering company 15 receives the order, and places an order for the bath with a can manufacturer 16. The can manufacturer 16 places an order for a specular plate with a specular plate maker 17 so as to deliver the specular plate by the specular plate maker 17. Or, the end user 14 places an order for the bath directly with the can manufacturer 16.

Fig. 18 is a diagram illustrating canned product ordering steps with reference to Embodiment 5 of the invention.
In Fig. 18, reference numerals 14 to 17 are the same as the reference numerals in Fig. 17. In Fig. 18, an licensee 18 illustrated to receive the order from the end user 14 and the engineering company 15, or the can manufacturer 16, design the entire bath or only the upper specular plate, and place the order with the can manufacturer 16 or the specular plate maker 17.
The licensee 18 (first company) has a computer A19 (first computer), and designs an upper specular portion (a set of the upper specular plate and each nozzle mounted the upper specular plate). An actual shape model (first model of the bath) of the designed upper specular portion is created, and the cleaning ability of the actual shape model is verified by using the cleaning simulation method described in Embodiment 1 and 2.
The specular plate maker 17 (second company) has a computer B20 (second computer) connected with the computer A19 through network 21. Data of the actual shape model is transferred from the computer A19 to create NC data for upper specular portion based on the transferred data. The upper specular portion is manufactured by using the NC data. The actual shape of the manufactured upper specular portion is three-dimensionally detected by the computer 20. Based on the three-dimensional detection, an actual shape model (second model of the bath) is created, and the cleaning ability of the actual shape model is verified by using the cleaning simulation method described in Embodiment 1 and 2.

Hereinafter, forms of each company in the diagram are described in detail as follows. Intermediate agencies are omitted.
In Fig. 17, the end user 14 represents plant facility owner, and manufactures various products. Pharmaceutical companies, food manufacturers, cosmetics manufacturers and chemical manufactures are included as the plant facilities owners. In many cases, the plant facilities owners are large companies having a specialized department for production facilities. The end user 14 may place an order of necessary machines such as the bath directly with the can manufacturer 16 or with the engineering company 15 for total plant construction.
The engineering company 15 is a generic company having know-how of various plant designs, necessary machinery supply and construction, and contracting to construct, reconstruct and maintain the various plants, not having in principle a manufacturing facility. When the engineering company 15 receives an order of full plant construction, the construction is divided into each part and is ordered to other engineering companies to do subcontracted construction work in many cases. The engineering company which receives an order of full plant construction is generally a listed large company, or may be a subsidiary of the chemical manufacturer and may be a part of major shipbuilding and engineering company in many cases.

The can manufacturer 16 is a manufacturer manufacturing the canned product (a generic term of molded object which is manufactured by bending or welding a steel plate such as stainless-steel) necessary for manufacturing facilities such as the bath. There are tens of thousands of manufacturers in the country.
However, scale of the manufacturers is small. In addition, most have small capital, and are companies of less than or equal to 30 employees. Introduction rate of an NC machine tool (a numeric control machine tool) or quality control system such as ISO9000 series is very low in comparison with other machine manufacturing industry because of business conditions and the small capital thereof. The can manufacturer 16 purchases the specular plate from the specular plate maker 17, makes necessary holes on the specular plate, welds each nozzle to be joined to the specular plate, finishes necessary operations such as buffing, welds the specular plate to be joined to an shell plate, completes a product, performs necessary inspections and tests, and delivers the product as a completed bath.

The specular plate maker 17 is a specialized maker manufacturing the specular plate as a machine element used for the canned product by press and a spinning method. There are representative makers of less than or equal to 10, occupying most domestic productions, in the country. The specular plate is manufactured by each can manufacturer before the war. However, specialized makers appears after the war, so that most specular plate is not manufactured by the can manufacturers in recent years. Most are middle-scale companies having workers of several tens to one thousand. A specular plate product is standardized in JIS, and standardized in each specular plate makers. Products having nonstandard measurement are also specially ordered. However, a number of standardized products is overwhelmingly more than a number of the specially ordered product. The specular plate maker 17 has a high quality control system and standardized manufacturing method in comparison with the case of the can manufacturer 16. Most specular plate are delivered to the can manufacturer 16.
Some specular plate makers 17 introduce the NC machine tool for plasma cutting and laser cutting, and make holes to mount the nozzle based on the design of the ordering party on the specular plate so as to perform a fare-paying service to omit a hole making operation (not fully automated) of the can manufacturer. Since a material steel sheet has a limited size, specular plates are joined by welding to form an specular plate having a large diameter. Accordingly, many specular plate makers have welding engineers and welding facilities in many cases. In some cases, the specular plate makers or subsidiary thereof has a can manufacturing section, and manufacture the bath.

The licensee 18 in Fig. 18 designs the upper specular plate of the bath having a complicated shape to improve the cleaning ability and the nozzle mounted thereon. The licensee 18 is a company having an important role in production system in Embodiment 5 and performing management. In Embodiment 5, the company is temporarily called as a licensee.

A flow of the order, manufacturing, and delivery in Embodiment 5 is as follows.
(1) The licensee 18 receives an order of a set of the upper specular plate of the machine requiring the high cleaning ability and each nozzle mounted thereon (hereinafter called as the upper specular portion) as a part of the bath from the end user 14, the engineering company 15 and the can manufacturer 16.
(2) The licensee discusses with the ordering party, uses, for example, technology in Embodiment 1 to 3 of the invention, designs the upper specular plate having high cleaning ability, and places the order of the upper specular plate with the specular plate maker 17.
(3) The specular plate maker 17 purchases, welds and joins parts such as specular plates manufactured in-house, pipes and flanges based on the design of the licensee 18.
(4) The specular plate maker 17 borrows onerously or purchases a three-dimensional shape detecting system using a contact sensor, laser beam, electromagnetic wave, and CCD sensor. The system is used in middle step of welding, temporary mounting, etc., to measure the actual shape in order to create an electronic data model thereof.
(5) The specular plate maker 17 simulates the created model with reference to Embodiment 1 and 2, and confirms the cleaning ability of the upper specular portion.
(6) Accordingly, it is possible to simply confirm manufacturing measurement accuracy at the time of performing the steps and completion. Whereby, the specular plate maker 17 joins without fearing an inspection with the licensee 18 and the end user 14. When generating problems in the steps, it is possible to resolve the problems.
(7) The specular plate maker 17 delivers the upper specular portion as the part of the bath to the can manufacturer 16 manufacturing the entire bath.
(8) The can manufacturer 16 receiving the upper specular portion mounts the upper specular portion on the in-house product so as to complete the bath.

When making holes on the specular plate, for example, the three-dimensional model data already completed by the licensee 18 is transferred to the specular plate maker 17 having a NC cutting machine and performing a hole making service, and is downloaded through the network 21. The specular plate maker 17 creates NC processing data based on the downloaded data, and can make holes inexpensively and accurately in a short time.
The upper specular portion requiring the cleaning ability has the complicated shape in many cases, so that the hole does not have a simple circular form. It is very difficult to realize accuracy by using a laying out method as a measurement method by humans.
When hole making is accurate, the measurement accuracy of the entire upper specular plate is improved remarkably. It is desirable to have compatibility in data transfer between the three-dimensional model data and the NC processing data. Accordingly, data conversion may have inefficiency in general combination or may not be converted substantially. Problems in the data transfer step may have effect on construction schedule.
When a combination of a model creator and a manufacturer is always same as shown in Embodiment 5, the problems are not generated.

The three-dimensional detecting system is on a road to technically develop, so that the three-dimensional detecting system is not inexpensively introduced. It is difficult to inexpensively develop a simulation method having practicality, and it is the same for the NC cutting machine. Demand for the bath requiring the cleaning ability is not so big in comparison with entire production volume of the canned product. Accordingly, the can manufacturer 16 having relatively-large scale has big financial strain in the facility investment under a situation where large share can not be obtained in competition with other companies in the same trade. However, when combining measures, it is obvious that the cleaning ability is improved in a broad sense.

When specific can manufacturer 16 was able to monopolize share of the bath having high cleaning ability miraculously by obtaining many related patent or superior technical know-how, competition principle may not be applied, so that price of the bath may rise. When only the upper specular portion is monopolized by specific supplier, percentage of the price of the upper specular portion in the entire bath is less than half price of the bath, so that there are few bad effects. In addition, there is no need to make the specular plate maker 17 monopolistic. When forming a competition system of companies of two to three, the competition principle is applied.

For example, when suppliers such as the specular plate makers are in charge of manufacturing of the upper specular portion in Embodiment 5, it is possible to monopolize partially by cost-down. Accordingly, construction opportunities increase, and manufacturing level rises. Since a manufacturing management object of this case is only the upper specular plate, so that it is possible to define necessary operations, unlike general can manufacturing requiring a disparate range of technologies. Accordingly, an advanced production control system to be called as a pending problem of the industry is introduced easily.

The delivery of the specular plate in which the nozzles are mounted on the in-house specular plate has been considered and performed by the specular plate maker 17. However, general baths have low added value, and it is difficult to find economic gain in comparison with the baths manufactured by the can manufacturer 16. Accordingly, the delivery is not successful. In Embodiment 5, it is possible to find the economic gain and improve product quality by combining the request of the cleaning ability, the simulation and the three-dimensional detecting system.

Depending on degree of requisition of the ordering party, the cleaning ability can be satisfactorily verified by creating the actual shape model in the above-mentioned Embodiment 4 and 5 and performing the cleaning simulation of the actual shape model.
Generally, the spray nozzle is mounted on the bath to perform a practical spray test (trial cleaning test) by each can manufacturer before the delivery. However, substantial cost is required for providing pump, temporary piping, etc. and performing thereof. The general can manufacturer 16 has frequently the trial test and has to prepare the test from zero when the test is required. In addition, time to perform the test is just before the delivery, and when problems are generated, the problems have much substantial effects on various fields.
For example, when the upper specular portion is specialized so as to perform the construction by the specular plate maker 17, an exclusive area can be provided and trial test device can be fixed so as to perform the trial test inexpensively. When creating the actual shape model and performing the simulation of the actual shape model in middle step, problems are generated little at the time of the trial test of completion inspection.

In Embodiment 5, the licensee 18 may be the engineering company 15 and may be the specular plate maker. The licensee 18 may be a company having design ability for the upper specular plate which has the complicated shape to improve the cleaning ability and capable of management to have the important role in the production system. However, design management ability of the entire plant facilities is not necessarily required.
A manufacturer manufacturing the upper specular portion may not be the specular plate maker 17, and may be small number of the specific can manufacturer. The manufacturer may be a company which makes initial investment, anticipates some market monopoly, has
sufficient construction technology, and has a system in which all or part of the production ability is specialized for manufacturing of the upper specular portion so as to introduce the advanced production control system to the manufacturing of the upper specular portion.

According to Embodiment 5, it is possible to make a system in which the created upper specular portion is three-dimensionally detected and the cleaning simulation thereof is performed so as to manufacture the upper specular portion having high cleaning ability.
Accordingly, a company having the system may ecpect partial monopoly in upper specular portion manufacturing field, so that the company can reduce production cost and improve the product quality so as to improve the cleaning ability of the bath in the entire field.
In addition, by a combination of the cleaning simulation method and, for example, a shape detecting system available in the market, it is possible to perform an intermediate inspection easily and inexpensively, and the practical spray test is omitted depending on circumstances so as to decrease the cost.
The upper specular plate requiring the cleaning ability is manufactured by specific specialized make. Accordingly, it is possible to decrease facility investment cost by concentrating manufacturing and inspection materials for cleaning ability improvement, decrease manufacturing cost and improve the product quality by good manufacturing skills and the advanced production control system.

In the above-mentioned Embodiment 1 to 5, the cleaning simulation and the bath are described. The cleaning simulation may be the fluid spray simulation spraying general fluid, and the bath has same effect even if the bath is a general bath having three-dimensional shape.

In the specification, the "spray nozzle" represents means which sprays solution such as a sprinkler to spray fire extinguishing fluid or water for planting, cleaning and sterilization solution for cleaning and sterilizing the interior of the bath, liquid or powder type coating materials for coating, or ink for printing.
In the specification, the "liquid" represents liquid type material to be scattered, jetted and sprayed. The liquid is included in mist visible in water. However, the liquid is not included in steam to be vaporized completely. Even if the liquid has very small particle size, it represents those to be sprayed in liquid form.
In the specification, the "powder" represents powder materials to be scattered, jetted and sprayed. The powder is included in the coating materials for electrostatic powder coating and powder type extinguishing agent.
In the specification, the "spray fluid" is materials to be sprayed from the spray nozzle, and represents the "liquid", "powder", "a mixture of the liquid and gas", "a mixture of the powder and gas", "a slurry object in which the powder is mixed with the liquid", and "a slurry object mixed in with the gas".
In the specification, the "cleaned object" represents a three-dimensional object to be sprayed with the "spray fluid". The "cleaned object" also represents the interior and exterior of the bath, an interior and exterior of a drinking water bottle, a bathtub and a bathroom to be automatically cleaned, a structure to be extinguished by the sprinkle, and grass on a golf course on which the water is sprayed.
And in the specification, the "bath" represents the tank or stirrer to be used for various industrial plants, the bathtub and the bathroom, and a container having the closed interior such as a load room of a tanker.
Fig. 19 is a diagram illustrating a typical example of a bath which is cleaned by the spray nozzle in a relation between the liquid to be sprayed and the sprayed object to be sprayed by the liquid.

### Industrial Applicability

In addition to the cleaning of the bath described above, the invention can be effectively used for the sprayed object requiring "a state sufficiently sprayed by the spray fluid" in shape optimization and manufacturing yield improvement for cleaning self-cleaning centrifugals, interior of the tankers, interior of the bathrooms, the bottles and semiconductor-related parts, shape optimization of coated objects and positioning of the spray nozzle in the spray coating and the electrostatic powder coating, a positioning plan of automatic sprinkler on the golf course, an installation position plan of the sprinkler in a building of building and a building shape design for improving the sprayed state, and shape design and manufacturing yield for machinery in medicinal plants or food plants, of which each part is completely sprayed by disinfection and sterilization solution.

### Brief Description of the Drawings

Fig. 1 is a diagram illustrating a flow of cleaning solution simulation method according to Embodiment 1.
Fig. 2 is a diagram illustrating a representative orbit of the cleaning solution in the cleaning solution simulation method according to Embodiment 2.
Fig. 3 is diagrams illustrating a spray direction and spray range of a spray nozzle according to Embodiment 2.
Fig. 4 is a diagram illustrating dispersion of the cleaning solution when the cleaning solution collides with a bath wall according to Embodiment 2.
Fig. 5 is a flow chart illustrating the flow of cleaning solution simulation method according to Embodiment 2.
Fig. 6 is diagrams illustrating a bath formed by deforming and specializing a shape of a part of the bath wall according to Embodiment 3.
Fig. 7 is a diagram illustrating cleaning solution reflected on a portion formed by deforming and specializing the shape of the part of the bath wall according to Embodiment 3.
Fig. 8 is a diagram illustrating the cleaning solution reflected on the portion formed by deforming and specializing the shape of the part of the bath wall according to Embodiment 3.
Fig. 9 is an enlarged view illustrating the cleaning solution reflected from the portion formed by deforming and specializing the shape of the part of the bath wall according to Embodiment 3.
Fig. 10 is an enlarged view illustrating movement of the cleaning solution reflected from the portion formed by deforming and specializing the shape of the part of the bath wall according to Embodiment 3.
Fig. 11 is an enlarged view illustrating another movement of the cleaning solution reflected from the portion formed by deforming and specializing the shape of the part of the bath wall according to Embodiment 3.
Fig. 12 is a diagram illustrating slits provided on the portion from the portion formed by deforming and specializing the shape of the part of the bath wall according to Embodiment 3.
Fig. 13 is a diagram illustrating fins provided on the portion formed by deforming and specializing the shape of the part of the bath wall according to Embodiment 3.
Fig. 14 is a diagram illustrating the portion formed by deforming and specializing the shape of the part of the bath wall to change the orbit of the cleaning solution according to Embodiment 3.
Fig. 15 is a diagram illustrating dispersion of the cleaning solution on the portion formed by deforming and specializing the shape of the part of the bath wall according to Embodiment 3.
Fig. 16 is diagrams illustrating bath cleaning by using a hollow stirring shaft and reflection plates according to Embodiment 4.
Fig. 17 is a diagram illustrating general ordering steps of canned product.
Fig. 18 is a diagram illustrating ordering steps of the canned product according to Embodiment 5.
Fig. 19 is a diagram illustrating a bath cleaned by the spray nozzle.
Fig. 20 is diagrams illustrating a shape of the spray nozzle used for bath cleaning.
Fig. 21 is a diagram illustrating a spray nozzle having a plurality of small conical jet fixed nozzles.
Fig. 22 is a diagram illustrating a three-dimensional rotational spray nozzle.
Fig. 23 is a diagram illustrating dispersion state of cleaning solution from the spray nozzle.
Fig. 24 is a diagram illustrating cleaning solution which is sprayed from the spray nozzle and reflected on inner wall of the bath.
Fig. 25 is a diagram illustrating a spray nozzle of which a planar position is changed.
Fig. 26 is a diagram illustrating a spray nozzle provided only for dead area of the bath.
Fig. 27 is a diagram illustrating an unevenness portion of the bath, mounted obliquely and having taper pipe shape.

### Description of Reference Numerals and Signs

- 1:: SHELL PLATE
- 2:: UPPER SPECULAR PLATE
- 3:: LOWER SPECULAR PLATE
- 4:: SPRAY NOZZLE
- 5:: PIPE CONNECTION NOZZLE
- 6:: PIPE CONNECTION NOZZLE
- 7:: SPRAY NOZZLE SEAT
- 10:: DIMPLE
- 11:: CONVEX-CURVED SURFACE PORTION
- 12:: STIRRING SHAFT
- 13:: REFLECTION PLATE
- 14:: END USER
- 15:: ENGINEERING COMPANY
- 16:: CAN MANUFACTURER
- 17:: SPECULAR PLATE MAKER
- 18:: LICENSEE
- 19:: COMPUTER A
- 20:: COMPUTER B
- 21:: NETWORK
- 31:: CLEANING SOLUTION
- 47:: SMALL FIXED SPRAY NOZZLE
- 61:: REFLECTED CLEANING SOLUTION
- 71:: DISPERSED CLEANING SOLUTION
- 101:: STRAIGHT LINE SECTION
- 102:: CURVED LINE SECTION
- 103:: RECESS

## Claims

1. A fluid spray simulation method of detecting a sprayed state of a sprayed object forming a three-dimensional space by the use of a device for spraying fluid on a plurality of positions spaced apart by different distances with a spray nozzle, the fluid spray simulation method comprising the steps of:
inputting three-dimensional shape data of the sprayed object, a position of the spray nozzle, and an initial speed of the fluid sprayed from the spray nozzle;
calculating physical orbits of the fluid sprayed in spray directions from the spray nozzle on the basis of the data inputted in the step of inputting three-dimensional shape data; and
calculating positions of intersections between the calculated physical orbits of the fluid and the sprayed object;
wherein data representing sprayed positions of the fluid on the sprayed object is outputted.

2. The fluid spray simulation method according to Claim 1, wherein the fluid spray simulation method further comprises the step of calculating speeds of the fluid at the intersections between the physical orbits of the fluid and the sprayed object.

3. The fluid spray simulation method according to any one of Claim 1 or 2, wherein the physical orbit of the fluid is adjusted by an experimental value.

4. The fluid spray simulation method according to any one of Claims 1 to 3, wherein changes in speed and direction of the fluid due to an influence of gas through which the fluid passes at the time of spraying the fluid are corrected by the experimental value.

5. The fluid spray simulation method according to any one of Claims 1 to 4, wherein an incidence angle of the fluid on a sprayed surface is calculated when the fluid collides with the sprayed object.

6. The fluid spray simulation method according to any one of Claims 1 to 5, wherein a second intersection between the fluid reflected from the surface of the sprayed object and the sprayed object is calculated.

7. The fluid spray simulation method according to Claim 5, wherein a dispersion vector of the fluid on the surface of the sprayed object is calculated on the basis of a gravity direction of the fluid, an incidence angle of the fluid on the sprayed object, and a collision speed of the fluid with the sprayed object.

8. The fluid spray simulation method according to any one of Claims 1 to 7, wherein the step of inputting the three-dimensional shape data includes inputting a spray density of the fluid.

9. The fluid spray simulation method according to Claims 8, wherein the number of intersections between the fluid and the sprayed object per a unit area of the sprayed object is calculated so as to detect a fluid spray density of the sprayed object from a relation between the total amount of the fluid sprayed from the spray nozzle and the number of intersections between the fluid and the sprayed object per a unit area of the sprayed object.

10. The fluid spray simulation method according to any one of Claims 1 to 9, wherein the three-dimensional shape data of the sprayed object is obtained by measuring an actual shape of the sprayed object.

11. The fluid spray simulation method according to any one of Claims 1 to 10, wherein the fluid is a liquid.

12. The fluid spray simulation method according to any one of Claims 1 to 11, wherein the steps are processed in parallel.

13. The fluid spray simulation method according to any one of Claim 6 or 7, wherein a shape of a fluid spray portion of the spray nozzle is formed oblique.

14. The fluid spray simulation method according to any one of Claims 1 to 13, wherein data representing the positions of the sprayed object on which the fluid is sprayed and the spray speed are visualized.

15. A fluid spray simulation method of detecting a sprayed state of a sprayed object forming a three-dimensional space by the use of a device for spraying fluid on a plurality of positions spaced apart by different distances with a spray nozzle, the fluid spray simulation method comprising the steps of:
creating a model of the sprayed object;
moving respective portions of the model of the sprayed object downward on the basis of the distances from the spray nozzle;
calculating a shade portion which is formed when a light source is positioned at a position of the spray nozzle;
returning the respective portions of the model of the sprayed object moved downward to their previous positions to include the shade portion; and
detecting the shade portion.

16. A fluid spray simulation method of detecting a cleaning ability of a bath of which the inside is cleaned by spraying a cleaning solution from a spray nozzle, the fluid spray simulation method comprising:
a first step of creating a model of the bath;
a second step of conceptualizing the cleaning solution as a point moving in accordance with an orbit on the basis of a mathematical expression and of jetting the cleaning solution for each point;
a third step of calculating a speed of the cleaning solution when the jetted cleaning solution collides with a bath wall of the model of the bath; and
a fifth step of calculating a collision speed of the cleaning solution with the bath wall depending on the calculated speed of the cleaning solution.

17. A fluid spray simulation method of detecting a cleaning ability of a bath of which the inside is cleaned by spraying a cleaning solution from a spray nozzle, the fluid spray simulation method comprising:
a first step of creating a model of the bath;
a second step of conceptualizing the cleaning solution as a point moving in accordance with an orbit on the basis of a mathematical expression and of jetting the cleaning solution for each point;
a fourth step of calculating an incidence angle of the cleaning solution at the time of collision with a bath wall; and
a fifth step of calculating a dispersion of the cleaning solution on the bath wall depending on the calculated incidence angle.

18. A fluid spray simulation method of detecting a cleaning ability of a bath of which the inside is cleaned by spraying a cleaning solution from a spray nozzle, the fluid spray simulation method comprising:
a first step of creating a model of the bath;
a second step of conceptualizing the cleaning solution as a point moving in accordance with an orbit on the basis of a mathematical expression and of jetting the cleaning solution for each point;
a third step of calculating a speed of the cleaning solution when the jetted cleaning solution collides with a bath wall of the model of the bath;
a fourth step of calculating an incidence angle of the cleaning solution at the time of the collision with the bath wall; and
a fifth step of calculating a reflection of the cleaning solution by the bath wall or a dispersion of the cleaning solution on the bath wall depending on the speed and the incidence angle of the cleaning solution at the time of the collision.

19. The fluid spray simulation method according to any one of Claims 16 to 18, wherein the steps 2 to 5 performed for each point of the cleaning solution are processed in parallel.

20. A computer program described to execute the fluid spray simulation method according to any one of Claims 1 to 19

21. A sprayed object which is manufactured or constructed into a shape determined by using the fluid spray simulation method according to any one of Claims 1 to 19.

22. A sprayed object, wherein a shape is determined by using the fluid spray simulation method according to any one of Claims 1 to 19, an actual three-dimensional shape is detected in any one step or both steps of a mid-manufacturing step and a manufacturing completion step, a three-dimensional model is created on the basis of the actual three-dimensional shape detection, and a spray ability of the three-dimensional model is verified by using the fluid spray simulation method according to any one of Claims 1 to 19 for manufacturing.

23. A bath of which the inside is cleaned by spraying a cleaning solution from a spray nozzle, comprising a shape specialization portion which changes an orbit of the cleaning solution sprayed from the spray nozzle.

24. A bath comprising a shape specialization portion which changes an orbit of a cleaning solution sprayed from a spray nozzle in response to a verification result of a cleaning ability of the bath by using the fluid spray simulation method according to Claims 16 to 19.

25. The bath according to Claim 23 or 24, wherein the shape specialization portion is a dimple or a convex-curved surface.

26. The bath according to Claim 25, wherein a recess or a fin is provided on the shape specialization portion so as to form a flow passage of the cleaning solution.

27. The bath according to Claims 23 to 26, wherein a slit for spraying the cleaning solution of the spray nozzle is formed oblique about a vertical direction.

28. A spray nozzle, wherein a slit for spraying a cleaning solution is formed oblique about a vertical direction.

29. A bath of which the inside is cleaned by spraying a cleaning solution from a spray nozzle, comprising a stirring shaft which has a hollow portion supplying the cleaning solution, a spray nozzle which is mounted on the stirring shaft, rotates with the stirring shaft, and sprays the cleaning solution supplied by the stirring shaft, a reflection plate which is mounted on the stirring shaft, rotates with the stirring shaft, and reflects the cleaning solution sprayed from the spray nozzle, and an unevenness portion which is cleaned by the cleaning solution reflected from the reflection plate.

30. The bath according to Claim 29, wherein the spray nozzles and the reflection plates form multiple pairs.

31. A bath manufacturing system, wherein a bath model is created to an upper specular portion constituting a bath to be designed in designing the upper specular portion by using the fluid spray simulation method according to any one of Claims 16 to 19, a cleaning ability of a first bath model created by the creation is verified by using the fluid spray simulation method, the designed upper specular portion is manufactured, an actual three-dimensional shape of the manufactured upper specular portion is detected, a bath model is created by using the fluid spray simulation method according to Claims 16 to 19 on the basis of the detected actual three-dimensional shape, and a cleaning ability of a second bath model created by the creation is verified by using the fluid spray simulation method.

32. A bath manufacturing system comprising:
a first computer which is placed in a first company designing an upper specular portion constituting a bath and designs the upper specular portion; and
a second computer which is placed in a second company professionally manufacturing the upper specular portion and is connected with the first computer through a network,
wherein the first computer creates a bath model to the upper specular portion designed by the first computer by using the fluid spray simulation method according to Claims 16 to 19 and verifies a cleaning ability of a first bath model created by the creation, the upper specular portion is manufactured by the second company, and the second computer detects an actual three-dimensional shape of the manufactured upper specular portion, creates a bath model by using the fluid spray simulation method according to any one of Claims 16 to 19 on the basis of the detected actual three-dimensional shape, and verifies a cleaning ability of a second bath model created by the creation by the fluid spray simulation method.

33. The bath manufacturing system according to Claim 32, wherein the second computer transfers data of the first bath model created by the first computer through the network so as to create NC data used for manufacturing the upper specular portion on the basis of the transferred data of the first bath model.

34. The bath manufacturing system according to Claim 32 or 33, wherein the first computer and the second computer are in common use by using the network.

## Amended claims

### Amended claims under Art. 19.1 PCT

**1.** A fluid spray simulation method of detecting a sprayed state of a sprayed object forming a three-dimensional space by the use of a device for spraying fluid on a plurality of positions spaced apart by different distances with a spray nozzle, the fluid spray simulation method comprising the steps of:
inputting three-dimensional shape data of the sprayed object, a position of the spray nozzle, and an initial speed of the fluid sprayed from the spray nozzle;
calculating physical orbits of the fluid sprayed in spray directions from the spray nozzle on the basis of the data inputted in the step of inputting three-dimensional shape data;
calculating positions of intersections between the calculated physical orbits of the fluid and the sprayed object; and
calculating speeds of the fluid at the intersections between the physical orbits of the fluid and the sprayed object,
wherein data representing sprayed positions of the fluid on the sprayed object is outputted.

**2.** A fluid spray simulation method of detecting a sprayed state of a sprayed object forming three-dimensional space by the use of a device for spraying fluid on a plurality of positions spaced apart by different distances with a spray nozzle, the fluid spray simulation method comprising the steps of:
inputting three-dimensional shape data of the sprayed object, a position of the spray nozzle, and an initial speed of the fluid sprayed from the spray nozzle;
calculating physical orbits of the fluid sprayed in spray directions from the spray nozzle on the basis of the data inputted in the step of inputting three-dimensional shape data;
calculating positions of intersections between the calculated physical orbits of the fluid and the sprayed object;
outputting data representing sprayed positions of the fluid on the sprayed object,
wherein the step of inputting the three-dimensional shape data includes inputting a spray density of the fluid sprayed from the spray nozzle.

**3.** The fluid spray simulation method according to Claim 1, wherein the step of inputting the three dimensional shape data includes inputting the spray density of the fluid.

**4.** The fluid spray simulation method according to any one of Claims 1 to 3, wherein the physical orbit of the fluid is adjusted by an experimental value.

**5.** The fluid spray simulation method according to any one of Claims 1 to 4, wherein changes in speed and direction of the fluid due to an influence of gas through which the fluid passes at the time of spraying the fluid are corrected by the experimental value.

**6.** The fluid spray simulation method according to any one of Claims 1 to 5, wherein an incidence angle of the fluid on a sprayed surface is calculated when the fluid collides with the sprayed object.

**7.** The fluid spray simulation method according to any one of Claims 1 to 6, wherein a second intersection between the fluid reflected from the surface of the sprayed object and the sprayed object is calculated.

**8.** The fluid spray simulation method according to Claim 6, wherein a dispersion vector of the fluid on the surface of the sprayed object is calculated on the basis of a gravity direction of the fluid, an incidence angle of the fluid on the sprayed object, and a collision speed of the fluid with the sprayed object.

**9.** The fluid spray simulation method according to any one of Claims 2 to 8, wherein the number of intersections between the fluid and the sprayed object per a unit area of the sprayed object is calculated so as to detect a fluid spray density of the sprayed object from a relation between the total amount of the fluid sprayed from the spray nozzle and the number of intersections between the fluid and the sprayed object per a unit area of the sprayed object.

**10.** The fluid spray simulation method according to any one of Claims 3 to 9, wherein an average collision speed at the intersections between the fluid and the sprayed object per a unit of the sprayed object is calculated and cleaning intensity of the sprayed object is detected on the basis of the total amount of the fluid sprayed from the spray nozzle, the number of intersections between the fluid and the sprayed object per a unit of the sprayed object, and the average collision speed.

**11.** The fluid spray simulation method according to any one of Claims 1 to 10, wherein the three-dimensional shape data of the sprayed object is obtained by measuring the actual shape of the sprayed object.

**12.** The fluid spray simulation method according to any one of Claims 1 to 11, wherein the fluid is a liquid.

**13.** The fluid spray simulation method according to any one of Claims 1 to 12, wherein the steps are processed in parallel.

**14.** The fluid spray simulation method according to any one of Claims 1 to 13, wherein data representing the positions of the sprayed object on which the fluid is sprayed and the spray speed are visualized.

**15.** A sprayed object verification method of verifying a spray ability of a three-dimensional model which is obtained by a three-dimensional simulation of the sprayed object by using the fluid spray simulation method according to any one of Claims 1 to 13.

**16.** A sprayed object which is manufactured or constructed into a shape determined by using the fluid spray simulation method according to any one of Claims 1 to 14.

**17.** The sprayed object which is manufactured or constructed by using a result of the sprayed object verification method according to Claim 15.

**18.** A computer program described to execute the fluid spray simulation method according to any one of Claims 1 to 14 or the sprayed object verification method according to Claim 15.

**19.** A sprayed object comprising a shape specialization portion which changes the orbit of the fluid sprayed from the spray nozzle by a simulation result using the fluid spray simulation method according to any one of Claims 6 to 14.

**20.** A bath manufacturing method, wherein an upper specular plate constituting a bath is manufactured by using the fluid spray simulation method according to any one of Claims 1 to 14 in designing the upper specular plate, the actual three dimensional shape of the upper specular plate is detected, and a cleaning ability of the upper specular plate is verified by using the verification method according to claim 15.

**21.** The bath manufacturing method according to Claim 20, wherein a plurality of calculators are used through a network.

**22.** A fluid spray simulation method of detecting a sprayed state of a sprayed object forming a three-dimensional space by the use of a device for spraying fluid on a plurality of positions spaced apart by different distances with a spray nozzle, the fluid spray simulation method comprising the steps of:
creating three-dimensional shape data of the sprayed object;
moving respective portions of the three-dimensional shape data of the sprayed object in a gravity direction on the basis of the distances from the spray nozzle; and
calculating a shade portion which is formed when a light source is positioned at a position of the spray nozzle and light is irradiated to the three-dimensional data,
wherein the shade portion is detected.

**23.** A bath of which the inside is cleaned by spraying a cleaning solution from a spray nozzle, wherein a shape specialization portion changing an orbit of the cleaning solution sprayed from the spray nozzle is formed in a part of the bath.

**24.** The bath according to Claim 23, wherein the shape specialization portion is a dimple or a convex-curved surface.

**25.** The bath according to Claim 23 or 24, wherein a recess or a fin is provided on the shape specialization portion so as to form a flow passage of the cleaning solution.

**26.** A bath comprising a spray nozzle in which a slit for spraying a cleaning solution is formed oblique about a vertical direction.

**27.** A rotational spray nozzle, wherein a slit for spraying a cleaning solution is formed oblique about a vertical direction.
